(19) Europäisches Patentamt
European Patent Office
Office européen des brevets

(11) EP 0 494 368 B1

# (12) EUROPÄISCHE PATENTSCHRIFT

(45) Veröffentlichungstag und Bekanntmachung des Hinweises auf die Patenterteilung:
**20.01.1999 Patentblatt 1999/03**

(51) Int Cl.$^6$: **C09K 19/42**, C09K 19/46

(21) Anmeldenummer: **91120211.7**

(22) Anmeldetag: **26.11.1991**

## (54) Supertwist-Flüssigkristallanzeige

Supertwist liquid crystal display

Affichage à cristaux liquides super torsadés

(84) Benannte Vertragsstaaten:
**DE GB IT**

(30) Priorität: **07.12.1990 DE 4039052**
**12.04.1991 DE 4111964**
**12.06.1991 DE 4119292**

(43) Veröffentlichungstag der Anmeldung:
**15.07.1992 Patentblatt 1992/29**

(73) Patentinhaber: **MERCK PATENT GmbH**
**64271 Darmstadt (DE)**

(72) Erfinder:
- **Weber, Georg**
  **W-6106 Erzhausen (DE)**
- **Rüger, Joachim, Dr.**
  **W-6100 Darmstadt (DE)**
- **Stahl, Klaus-Peter, Dr.**
  **W-6100 Darmstadt (DE)**
- **Schmidt, Martina**
  **W-6115 Münster 2 (DE)**
- **Pauluth, Detlef, Dr.**
  **W-6105 Ober-Ramstadt (DE)**
- **Römer, Michael, Dr.**
  **W-6054 Rodgau 2 (DE)**
- **Kompter, Michael, Dr.**
  **W-6086 Riedstadt-Erfelden (DE)**

(56) Entgegenhaltungen:
**EP-A- 0 273 443**
**EP-A- 0 365 962**
**EP-A- 0 393 443**
**WO-A-90/04622**
**WO-A-91/00898**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 494 368 B1

## Beschreibung

Die Erfindung betrifft Supertwist-Flüssigkristallanzeigen (SFA) mit sehr kurzen Schaltzeiten und guten Steilheiten und Winkelabhängigkeiten sowie die darin verwendeten neuen nematischen Flüssigkristallmischungen.

SFA gemäß des Oberbegriffs sind bekannt, z.B. aus EP 0 131 216 B1; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1), pp. 1-8 (1986). Der Begriff SFA umfaßt hier jedes höher verdrillte Anzeigeelement mit einem Verdrillungswinkel dem Betrage nach zwischen 160° und 360°, wie beispielsweise die Anzeigeelemente nach Waters et al. (C.M. Waters et al., Proc. Soc. Inf. Disp. (New York) (1985) (3rd Intern. Display Conference, Kobe, Japan), die STN-LCD's (DE OS 35 03 259), SBE-LCD's (T.J. Scheffer und J. Nehring, Appl. Phys. Lett. 45 (1984) 1021), OMI-LCD's (M. Schadt und F. Leenhouts, Appl. Phys. Lett. 50 (1987), 236, DST-LCD's (EP OS 0 246 842) oder BW-STN-LCD's (K. Kawasaki et al., SID 87 Digest 391 (20.6)).

Derartige SFA zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus. Von besonderem Interesse sind SFA mit sehr kurzen Schaltzeiten insbesondere auch bei tieferen Temperaturen. Zur Erzielung von kurzen Schaltzeiten wurden bisher insbesondere die Viskositäten der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Ähnliche Flüssigkristallmischungen sind beschrieben (z. B. JP 60 51 778 und EP-0 232 052), jedoch sind diese Mischungen für SFA's aufgrund der geringen Steilheit ihrer elektrooptischen Kennlinie weniger geeignet.

Weitere Supertwist-Flüssigkristallanzeigen enthaltend ähnliche Flüssigkristallmischungen sind in den Offenlegungsschriften WO-A-9100898 und WO-A-9004622 offenbart.

Die in WO-A-9100898 beschriebenen Flüssigkristallmischungen basieren auf direkt verknüpften oder durch $-CH_2CH_2-$ und/oder -C≡C- -Gruppen verknüpften Zwei- oder Dreiringverbindungen, die als eine der terminalen Gruppen eine Fluor-, eine Chlor-, eine Cyano-, eine Isothiocyanato- oder eine durch Fluor substituierte Methyl-, Ethyl- oder Ethoxygruppe enthalten.

Die in WO-A-9004622 beschriebenen Flüssigkristallmischungen basieren auf Mischungen, die dielektrisch neutrale Dreiringverbindungen, deren Ringe direkt oder durch eine Einfach- und eine $-CH_2CH_2-$ -Bindung miteinander verknüpft sind, 10 bis 80 Gew.-% von Verbindungen mit einer dielektrischen Anisotropie von über +1,5 und zusätzlich eine weitere Komponente enthalten, welche beispielsweise Phenylpyrimidine beinhaltet.

Zur Erzielung einer steilen elektrooptischen Kennlinie sollen die Flüssigkristallmischungen relativ große Werte für $K_3/K_1$ und relativ kleine Werte für $\Delta\varepsilon/\varepsilon_\perp$ aufweisen.

Über die Optimierung des Kontrastes und der Schaltzeiten hinaus werden an derartige Mischungen weitere wichtige Anforderungen gestellt:

1. Breites d/p-Fenster
2. Hohe chemische Dauerstabilität
3. Hoher elektrischer Widerstand
4. Geringe Frequenzabhängigkeit der Schwellenspannung.

Die erzielten Parameterkombinationen sind bei weitem noch nicht ausreichend, insbesondere für Hochmultiplex-STN (1/400). Zum Teil ist dies darauf zurückzuführen, daß die verschiedenen Anforderungen durch Materialparameter gegenläufig beeinflußt werden.

Es besteht somit immer noch ein großer Bedarf nach SFA mit sehr kurzen Schaltzeiten bei gleichzeitig großem Arbeitstemperaturbereich, hoher Kennliniensteilheit, guter Winkelabhängigkeit des Kontrastes und niedriger Schwellenspannung, die den oben angegebenen Anforderungen gerecht werden.

Der Erfindung liegt die Aufgabe zugrunde, SFA bereitzustellen, die die oben angegebenen Nachteile nicht oder nur in geringerem Maße und gleichzeitig sehr kurze Schaltzeiten aufweisen.

Es wurde nun gefunden, daß diese Aufgabe gelöst werden kann, wenn die nematische Flüssigkristallmischung

a) auf Komponente A basiert, welche

- eine oder mehrere Verbindungen der Formel IIa :

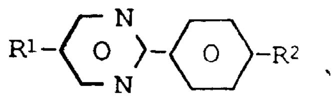

IIa

- eine oder mehrere Verbindungen der Formeln IIc bis IIe:

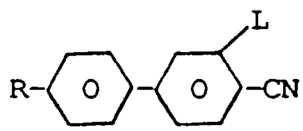

IIc

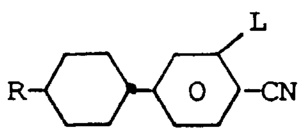

IId

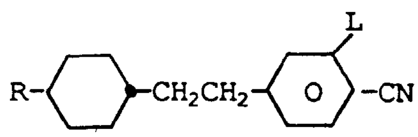

IIe

- und eine oder mehrere Verbindungen der Formeln IIf bis IIh:

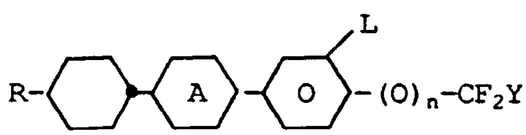

IIf

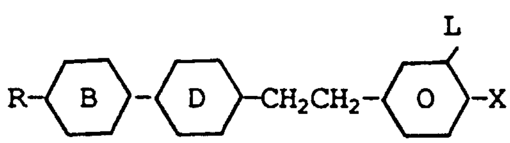

IIg

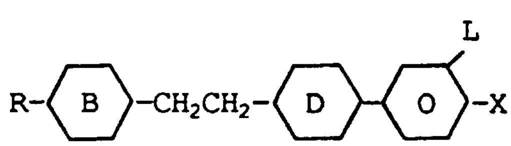

IIh

enthält,

worin

$R^1$ und $R^2$ jeweils n-Alkyl mit 1 bis 8 C-Atomen, worin die Summe der C-Atome der Reste $R^1$ und $R^2$ 4 bis 8 beträgt,

R n-Alkyl, Alkoxy oder n-Alkenyl mit bis zu 9 C-Atomen,

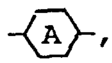, 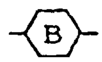 und 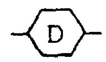

jeweils unabhängig voneinander

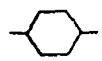 oder 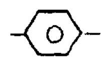

bedeuten,

L und Y jeweils H oder F,

X F, Cl, $-CF_3$, $-CHF_2$, $-OCF_3$, $-OCHF_2$, $-OCF_2CF_2H$ oder $-OC_2F_5$, und

n 0 oder 1

bedeuten,

b) 0-40 Gew.% einer flüssigkristallinen Komponente B, bestehend aus einer oder mehreren Verbindungen mit einer dielektrischen Anisotropie von -1,5 bis +1,5 der allgemeinen Formel I,

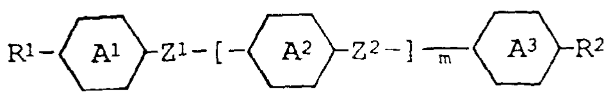 I

enthält,
worin

$R^1$ und $R^2$ jeweils unabhängig voneinander n-Alkyl, n-Alkoxy, n-Oxaalkyl, ω-Fluoralkyl oder n-Alkenyl mit bis zu 9 C-Atomen,

$A^1$, $A^2$ und $A^3$ jeweils unabhängig voneinander 1,4-Phenylen, 2- oder 3-Fluor-1,4-phenylen, trans-1,4-Cyclohexylen oder 1,4-Cyclohexenylen,

$Z^1$ und $Z^2$ jeweils unabhängig voneinander $-CH_2CH_2-$, -C≡C- oder eine Einfachbindung, und

m 0, 1 oder 2,

bedeuten,

c) 0-20 Gew.% einer flüssigkristallinen Komponente C, bestehend aus einer oder mehreren Verbindungen mit einer dielektrischen Anisotropie von unter -1,5, enthält, und

d) eine optisch aktive Komponente D in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,7 und insbesondere etwa 0,2 - 1,3 beträgt, und daß die nematische Flüssigkristallmischung einen nematischen Phasenbereich von mindestens 60 °C, eine Viskosität von nicht mehr als 35 mPa.s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20 °C bezogen sind.

Gegenstand der Erfindung ist somit ein SFA mit

- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 100 und 600°, dadurch gekennzeichnet, daß die nematische Flüssigkristallmischung

a) auf Komponente A basiert, welche

- eine oder mehrere Verbindungen der Formel IIa:

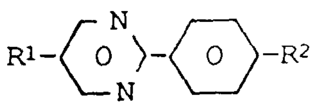

IIa

- eine oder mehrere Verbindungen der Formeln IIc bis IIe:

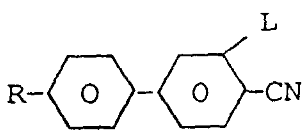

IIc

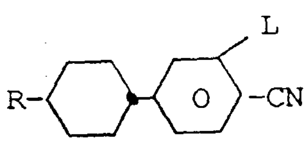

IId

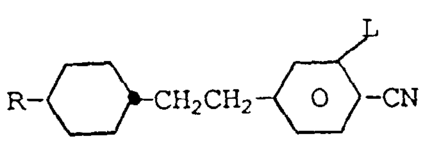

IIe

- und eine oder mehrere Verbindungen der Formeln IIf bis IIh

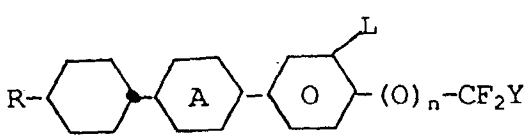

IIf

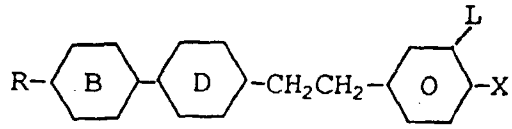

IIg

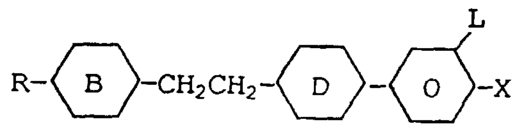

IIh

enthält,

worin

$R^1$ und $R^2$ jeweils n-Alkyl mit 1 bis 8 C-Atomen, worin die Summe der C-Atome der Reste $R^1$ und $R^2$ 4 bis 8 beträgt,

R n-Alkyl, Alkoxy oder n-Alkenyl mit bis zu 9 C-Atomen,

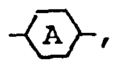, 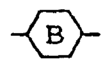 und 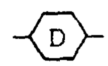

jeweils unabhängig voneinander

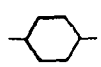 oder 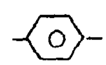

bedeuten,

L und Y jeweils H oder F,

X F, Cl, $-CF_3$, $-CHF_2$, $-OCF_3$, $-OCHF_2$, $-OCF_2CF_2H$ oder $-OC_2F_5$, und

n 0 oder 1

bedeuten,

b) 0-40 Gew.% einer flüssigkristallinen Komponente B, bestehend aus einer oder mehreren Verbindungen mit einer dielektrischen Anisotropie von -1,5 bis +1,5 der allgemeinen Formel I,

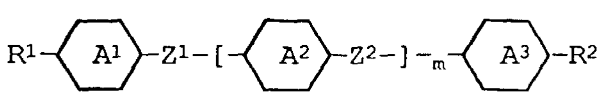

I

enthält,
worin

$R^1$ und $R^2$ jeweils unabhängig voneinander n-Alkyl, n-Alkoxy, n-Oxaalkyl, ω-Fluoralkyl oder n-Alkenyl mit bis zu 9 C-Atomen,

$A^1$, $A^2$ und $A^3$ jeweils unabhängig voneinander 1,4-Phenylen, 2- oder 3-Fluor-1,4-phenylen, trans-1,4-Cyclohexylen oder 1,4-Cyclohexenylen,

$Z^1$ und $Z^2$ jeweils unabhängig voneinander $-CH_2CH_2-$, $-C{\equiv}C-$ oder eine Einfachbindung, und

m 0, 1 oder 2,

bedeuten,

c) 0-20 Gew.% einer flüssigkristallinen Komponente C, bestehend aus einer oder mehreren Verbindungen mit einer dielektrischen Anisotropie von unter -1,5, enthält, und

d) eine optisch aktive Komponente D in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,7 und insbesondere etwa 0,2 - 1,3 beträgt, und daß die nematische Flüssigkristallmischung einen nematischen Phasenbereich von mindestens 60 °C, eine Viskosität von nicht mehr als 35 mPa.s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20 °C bezogen sind.

Gegenstand der Erfindung sind auch entsprechende Flüssigkristallmischungen zur Verwendung in SFA.

Die einzelnen Verbindungen z.B. der Formeln I und IIa bis IIh oder auch andere Verbindungen, die in den erfindungsgemäßen SFA verwendet werden können, sind entweder bekannt, oder sie können analog zu den bekannten Verbindungen hergestellt werden.

Bevorzugte Flüssigkristallmischungen enthalten

a) mindestens eine Komponente, ausgewählt aus der Gruppe B4, bestehend aus Verbindungen der Formeln AI bis AVI,

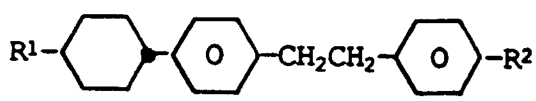

AI

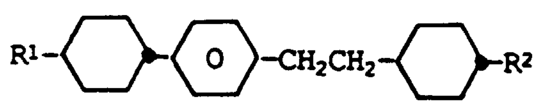

AII

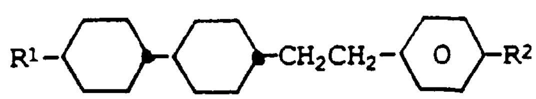

AIII

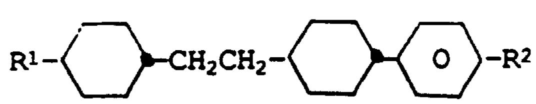

AIV

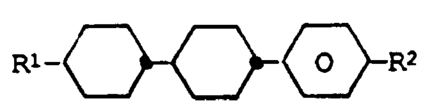

AV

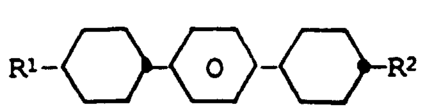

AVI

worin $R^1$ und $R^2$ jeweils unabhängig voneinander jeweils R bedeuten und

R Alkyl mit 1-12 C-Atomen ist, worin auch eine oder zwei nicht benachbarte $CH_2$-Gruppen durch -O-, -CH=CH-, -CO-, -O-CO- oder -CO-O- ersetzt sein können,

b) und/oder mindestens eine Komponente, ausgewählt aus der Gruppe B1, bestehend aus den Verbindungen der Formeln BI bis BIV,

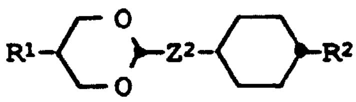

BI

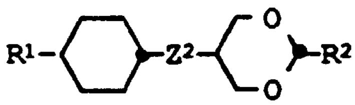

BII

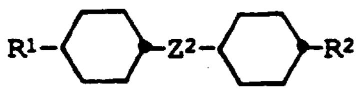

BIII

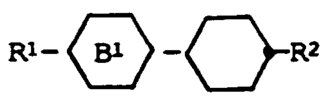

BIV

worin $R^1$ und $R^2$ jeweils unabhängig voneinander die für R angegebene Bedeutung haben, $Z^2$ $-CH_2CH_2-$, -CO-O-, -O-CO- oder eine Einfachbindung, und

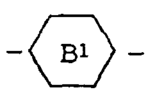

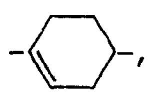 , 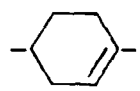 oder 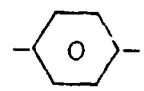

bedeutet,

und/oder mindestens eine Komponente, ausgewählt aus der <u>Gruppe B2</u>, bestehend aus den Verbindungen der Formeln BV bis BVII,

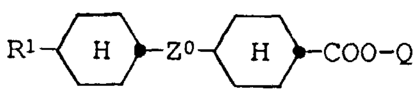

BV

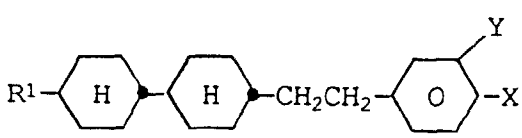

BVI

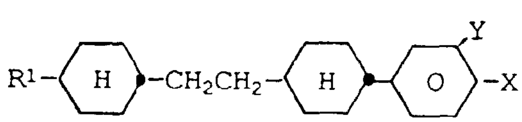

BVII

worin $R^1$ die für R angegebene Bedeutung hat,

$Z^0$ $-CH_2CH_2-$ oder eine Einfachbindung ist, und

Q

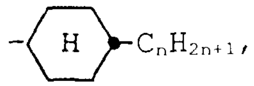 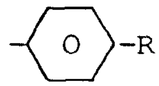 oder 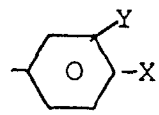

bedeutet,
wobei n 1 bis 9 ist, X bedeutet CN oder F und Y ist H oder F,
und/oder mindestens eine Komponente, ausgewählt aus der Gruppe B3, bestehend aus den Verbindungen der Formel BVIII,

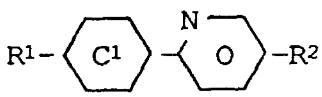 BVIII

worin $R^1$ und $R^2$ jeweils unabhängig voneinander die für R angegebene Bedeutung haben, und

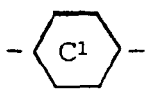 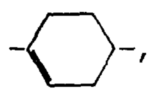 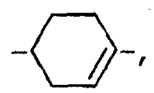 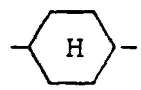

oder

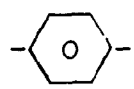

bedeutet.

Besonders bevorzugte Verbindungen der Formel BIII sind diejenigen der folgenden Teilformeln,

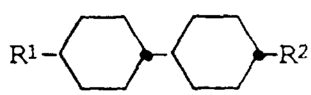

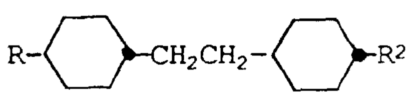

worin

$R^1$ $CH_3-(CH_2)_n-O-$, $CH_3-(CH_2)_t-$, trans-$H-(CH_2)_r-CH=CH-(CH_2CH_2)_s-CH_2O-$ oder trans-$H-(CH_2)_r-CH=CH-(CH_2CH_2)_s-$,

$R^2$ $CH_3-(CH_2)_t-$

n 1, 2, 3 oder 4

r 0, 1, 2 oder 3

s 0 oder 1, und

t 1, 2, 3 oder 4 ist.

Ferner bevorzugt sind diejenigen Verbindungen der Teilformel,

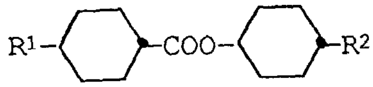

worin $R^1$ und $R^2$ die oben angegebene Bedeutung haben.

Der Anteil der Verbindungen der Formel BIII der oben angegebenen Teilformeln ist vorzugsweise ca. 5 % bis 45 %, insbesondere bevorzugt ca. 10 % bis 35 %. Besonders bevorzugte Verbindungen der Formel BIV sind diejenigen der folgenden Teilformel,

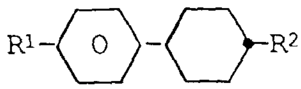

worin

$R^1$ $CH_3$-$(CH_2)_n$-O- oder trans-H-$(CH_2)_r$O-CH=CH-$(CH_2CH_2)_s$-$CH_2$O- und $R^2$ $CH_3$-$(CH_2)_t$- ist, wobei

n 1, 2, 3 oder 4,

r 0, 1, 2 oder 3,

s 0 oder 1, und

t 1, 2, 3 oder 4 ist.

Der Anteil dieser Verbindungen, bzw. der Verbindungen der Formel BIV, ist vorzugsweise ca. 5 % bis 40 %, insbesondere bevorzugt ca. 10 % bis 35 %.

Vorzugsweise enthalten die Mischungen Verbindungen der Formel BIII, insbesondere solche der Teilformel

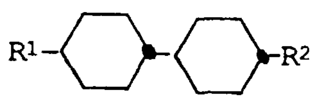

In einer besonders bevorzugten Ausführungsform enthalten die Mischungen gleichzeitig Verbindungen der Formeln BIII und BIV, wobei der Gesamtanteil für Komponenten der Gruppe B1 gewahrt bleibt.

Falls Verbindungen der Formeln BI und/oder BIII vorhanden sind, bedeuten $R^1$ und $R^2$ vorzugsweise jeweils unabhängig voneinander n-Alkyl mit 1 bis 7 C-Atomen oder (trans)-n-Alkenyl mit 3 bis 7 C-Atomen. $Z^2$ ist vorzugsweise eine Einfachbindung. BI ist besonders bevorzugt.

Ferner bevorzugt sind erfindungsgemäße Mischungen, die eine oder mehrere Verbindungen der Formel BIV enthalten, worin

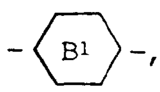
, 
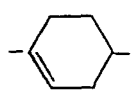
oder
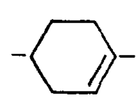

bedeutet und $R^1$ und $R^2$ eine der oben angegebenen bevorzugten Bedeutungen haben, insbesondere bevorzugt n-Alkyl mit 1 bis 7 C-Atomen bedeuten.

In jedem Fall bleibt der Gesamtanteil für Komponenten der Gruppe B1 gewahrt.

Der Anteil der Verbindungen der Gruppe B2 beträgt vorzugsweise ca. 5 % bis 45 %, insbesondere bevorzugt 5 % bis 20 %. Der Anteil (bevorzugte Bereiche) für BV bis BVII ist wie folgt:

| | |
|---|---|
| BV | ca. 5 % bis 30 %, vorzugsweise ca. 5 % bis 15 % |
| Summe BVI und BVII: | ca. 5 % bis 25 %, vorzugsweise ca. 10 % bis 20 %. |

Bevorzugte Verbindungen der Gruppe B2 sind im folgenden angegeben:

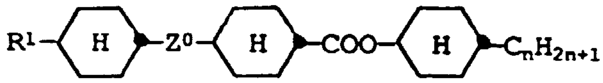
BV1

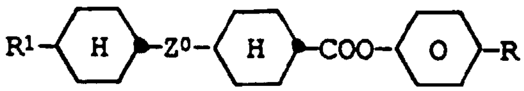
BV2

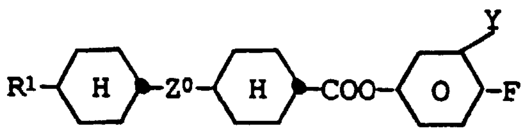
BV3

$R^1$ ist vorzugsweise n-Alkyl mit 1 bis 7 C-Atomen oder (trans)-n-Alkenyl mit 3 bis 7 C-Atomen. $Z^0$ ist vorzugsweise eine Einfachbindung. R hat vorzugsweise die oben für $R^1$ angegebene bevorzugte Bedeutung oder bedeutet Fluor. Y ist vorzugsweise Fluor.

Vorzugsweise enthalten die erfindungsgemäßen Mischungen eine oder mehrere Verbindungen ausgewählt aus der Gruppe bestehend aus BV3, BV2 und BV1 in einem Gesamtanteil von ca. 5 bis 35 %.

In einer besonders bevorzugten Ausführungsform enthalten die erfindungsgemäßen Mischungen neben Verbindungen der Formeln BV3 und BV2 (R = F) weitere terminal fluorierte Verbindungen zum Beispiel ausgewählt aus der Gruppe bestehend aus,

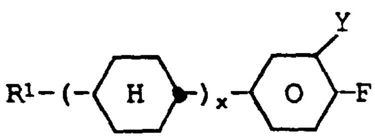

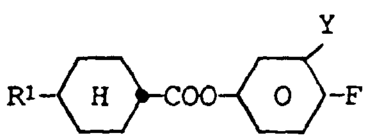

und/oder polare Heterocyclen ausgewählt aus der Gruppe bestehend aus

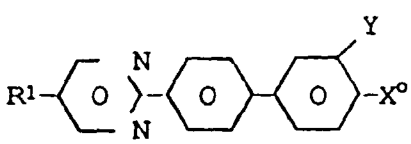

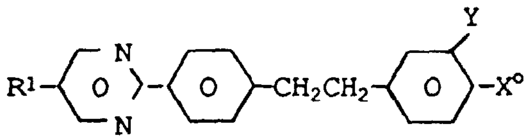

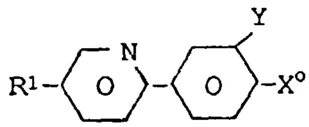

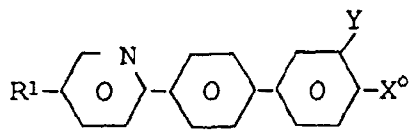

worin $R^1$ vorzugsweise n-Alkyl mit 1 bis 7 C-Atomen oder (trans)-n-Alkenyl mit 3 bis 7 C-Atomen, x 1 oder 2, X° F, Cl, $CF_3$, $-OCF_3$ oder $-OCHF_3$, und Y H oder F bedeutet.

Der Gesamtanteil aller terminal fluorierter Verbindungen beträgt vorzugsweise ca. 5 % bis 65 %, insbesondere ca. 15 % bis 40 %.

Der Anteil der Verbindungen aus Gruppe B3 beträgt vorzugsweise ca. 5 % bis 30 %, insbesondere bevorzugt ca. 10 % bis 20 %. $R^1$ ist vorzugsweise n-Alkyl oder n-Alkoxy mit jeweils 1 bis 9 C-Atomen. $R^2$ ist vorzugsweise n-Alkyl mit 1 bis 9 C-Atomen. Es können jedoch auch analoge Verbindungen mit Alkenyl- bzw. Alkenyloxy-Gruppen eingesetzt werden. Verbindungen der Formel BVIII sind bevorzugt.

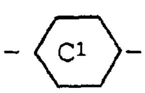

ist vorzugsweise 1,4-Phenylen.

Die erfindungsgemäßen Mischungen enthalten Verbindungen aus mindestens einer der Gruppen B1, B2 und B3. Vorzugsweise enthalten sie eine oder mehrere Verbindungen aus Gruppe B1 und eine oder mehrere Verbindungen aus Gruppe B2 und/oder B3.

Ferner bevorzugt sind Isothiocyanate, z.B. der Formel

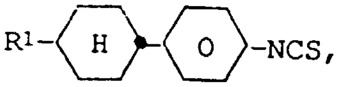

worin $R^1$ n-Alkyl mit 1 bis 7 C-Atomen oder n-Alkenyl mit 3 bis 7 C-Atomen bedeutet.

In einer besonders bevorzugten Ausführungsform enthalten die erfindungsgemäßen Mischungen vorzugsweise ca. 5 % bis 20 % einer oder mehrerer Verbindungen mit einer dielektrischen Anisotropie von unter -1,5 (Komponente C). Derartige Verbindungen sind bekannt, z.B. Derivate der 2,3-Dicyanhydrochinone oder Cyclohexanderivate mit dem Strukturelement

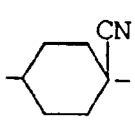

gemäß DE-OS 32 31 707 bzw. DE-OS 34 07 013.

Vorzugsweise werden jedoch Verbindungen mit dem Strukturelement 2,3-Difluor-1,4-phenylen gewählt, z.B. Verbindungen gemäß DE-OS 38 07 801, 38 07 861, 38 07 863, 38 07 864 oder 38 07 908. Besonders bevorzugt sind Tolane mit diesem Strukturelement gemäß der Internationalen Patentanmeldung PCT/DE 88/00133, insbesondere solche der Formeln,

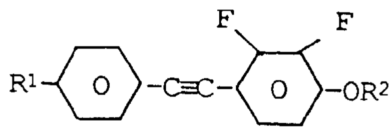

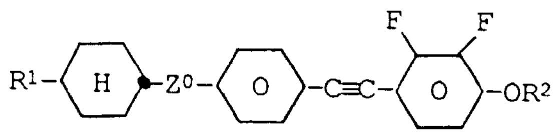

worin $R^1$ und $R^2$ jeweils unabhängig voneinander vorzugsweise n-Alkyl mit 1 bis 7 C-Atomen oder n-Alkenyl mit 3 bis 7 C-Atomen bedeuten und $Z^0$ $-CH_2CH_2-$ oder eine Einfachbindung ist, und Phenylpyrimidine der Formel

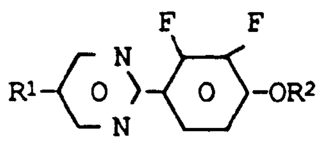

entsprechend DE-OS 38 07 871.

In einer besonders bevorzugten Ausführungsform enthalten die Mischungen ca. 5 % bis 35 %, insbesondere bevorzugt ca. 10 % bis 20 % an flüssigkristallinen Tolan-Verbindungen. Hierdurch kann bei geringeren Schichtdicken (ca. 5-6 µm) gearbeitet werden, wodurch die Schaltzeiten deutlich kürzer werden. Besonders bevorzugte Tolane der Formeln T1 und T2 sind im folgenden angegeben:

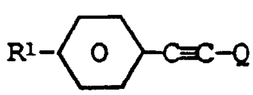

T1

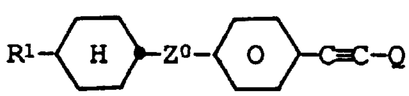

T2

$R^1$ ist vorzugsweise n-Alkyl oder n-Alkoxy mit 1 bis 7 C-Atomen,

$Z^0$ ist $-CH_2CH_2-$ oder eine Einfachbindung,

Q ist

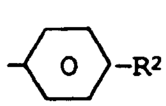 , 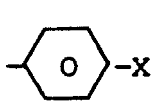 oder 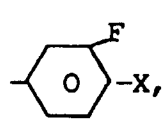 ,

wobei

X ist F, Cl oder $OCF_3$, wobei

$R^2$ n-Alkyl oder n-Alkoxy mit jeweils 1 bis 7 C-Atomen oder n-Alkenyl oder n-Alkenyloxy mit jeweils 3 bis 7 C-Atomen bedeutet.

Im folgenden weitere besonders bevorzugten Ausführungsformen:

Die Komponente A enthält eine oder mehrere, vorzugsweise 2, 3 oder 4, Verbindungen der Formel IIa, insbesondere worin $R^1$ und $R^2$ n-Alkyl mit 1 bis 8, vorzugsweise 1 bis 5 C-Atomen bedeutet insbesondere worin die Summe der C-Atomen der beiden Reste $R^1$ und $R^2$ 4 bis 8, insbesondere 4 bis 7, beträgt,

Weiterhin enthält die Komponente A eine oder mehrere, vorzugsweise 2, 3 oder 4, Verbindungen der Formel IId, insbesondere worin L H und R n-Alkyl mit 1 bis 8, vorzugsweise 1 bis 5 C-Atomen bedeutet.

Weiterhin enthält die Komponente A eine oder mehrere, vorzugsweise 2, 3 oder 4 Verbindungen der Formel IIf, insbesondere worin L H, n 1 Y F und R n-Alkyl mit 1 bis 8, vorzugsweise 1 bis 5 C-Atomen bedeutet.

Weiterhin enthält die Komponente A vorzugsweise neben einer oder mehreren Verbindungen der Formel IIf eine oder mehrere, vorzugsweise 1, 2 oder 3, Verbidnungen der Formel IIg, insbesondere worin L H bedeutet und X F oder $OCF_3$ bedeutet oder worin L und X F bedeuten.

Der Anteil der Verbindungen der Formel IIa bezogen auf die Komponente A beträgt 10 bis 40 %, vorzugsweise 15 bis 30, insbesondere 20 bis 25 Gew.%.

Der Anteil der Verbindungen der Formel IId bezogen auf die Komponente A beträgt 20 bis 60, vorzugsweise 25 bis 45, insbesondere 30 bis 35 Gew.%.

Der Anteil der Verbindungen der Formel IIf und IIg beträgt 25 bis 70, vorzugsweise 35 bis 60, insbesondere 40 bis 50 Gew.%.

Insbesondere bevorzugt sind solche Flüssigkristallmischungen, die neben den bevorzugten Verbindungen der Komponente A eine oder mehrere Verbindungen ausgewählt aus den Verbindungen der folgenden Formeln enthalten,

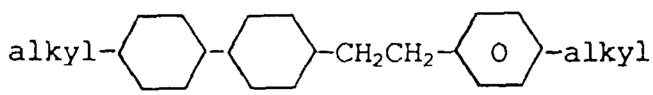

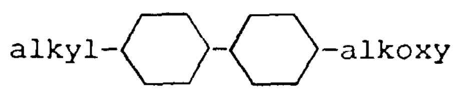

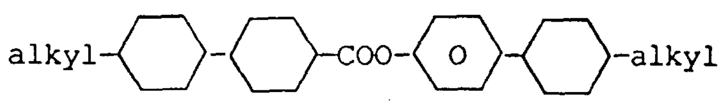

wobei alkyl und alkoxy jeweils n-Alkyl oder n-Alkoxy mit 1 bis 8 C-Atomen bedeutet.

- Komponente A enthält eine oder mehrere Verbindungen der Formeln IIa1-IIa2,IId1-IId2, IIf1-IIf5 und/oder IIg1-IIg5,

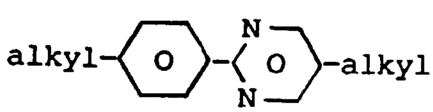

IIa1

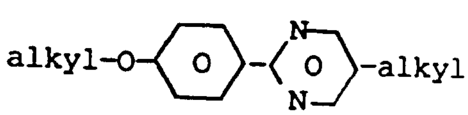

IIa2

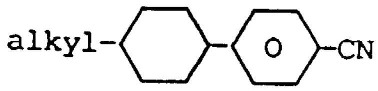

IId1

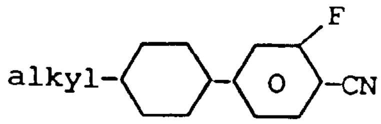

IId2

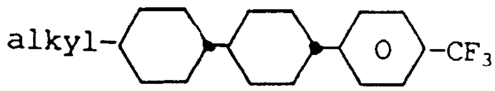

IIf1

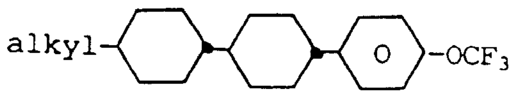

IIf2

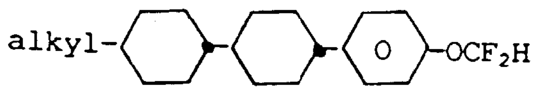

IIf3

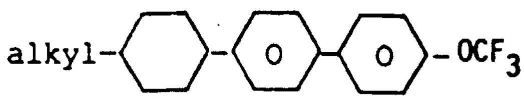

IIf4

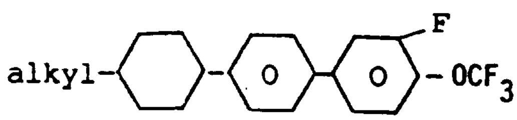

IIf5

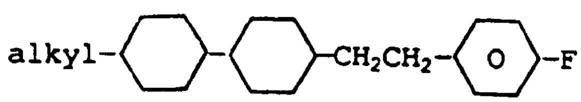

IIg1

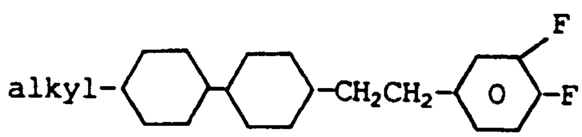

IIg2

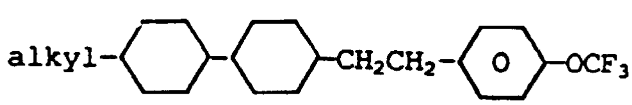

IIg3

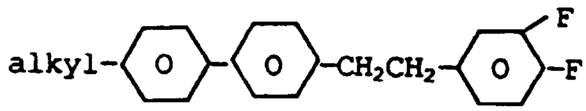

IIg4

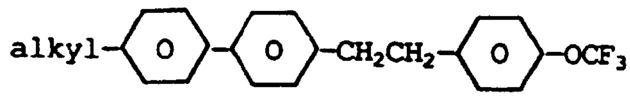

IIg5

worin alkyl n-Alkyl mit 1 bis 9 C-Atomen bedeutet.

- Komponente A enthält neben den Verbindungen der Formeln IIa bis IIh eine oder mehrere Verbindungen der Formel

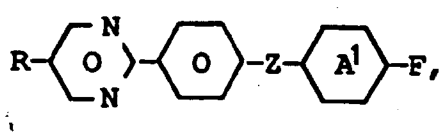

worin

R n-Alkyl, n-Alkoxy oder n-Alkenyl mit 1-9 C-Atomen,

Z $-CH_2CH_2-$ oder eine Einfachbindung, und

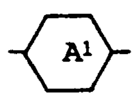 1,4-Phenylen, 2- oder 3-Fluor-1,4-phenylen oder 1,4-Cyclohexylen

bedeutet.

- X bedeutet F, Cl, $CF_3$, $-OCF_3$, $OCHF_2$ oder $CHF_2$.
- Komponente B enthält eine oder mehrere Verbindungen ausgewählt aus der Gruppe bestehend aus II1 bis II7,

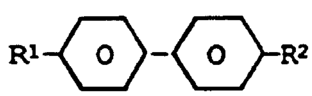

II1

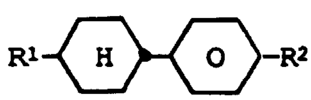

II2

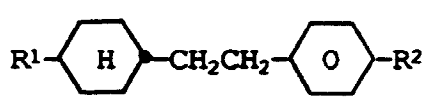

II3

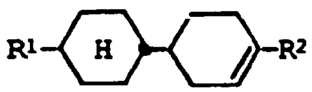

II4

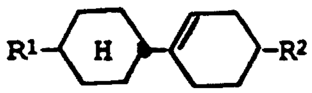

II5

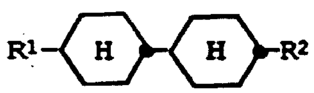

II6

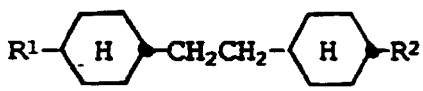

II7

worin $R^1$ und $R^2$ die in Anspruch 1 angegebene Bedeutung haben.

- Komponente B enthält zusätzlich eine oder mehrere Verbindungen ausgewählt aus der Gruppe bestehend aus II8 bis II21,

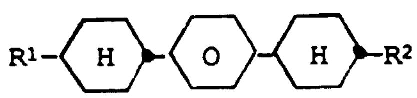

II8

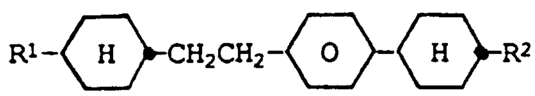

II9

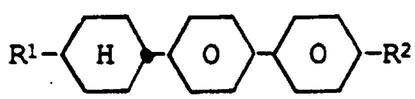

II10

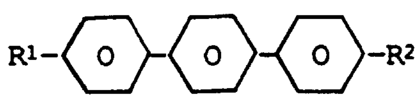

II11

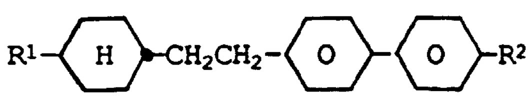

II12

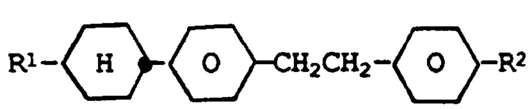

II13

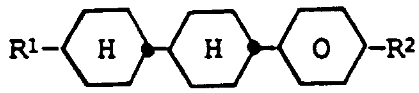

II14

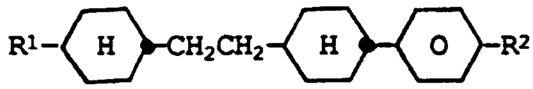

II15

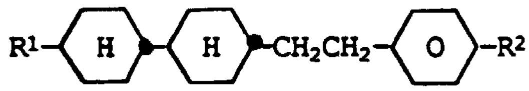

II16

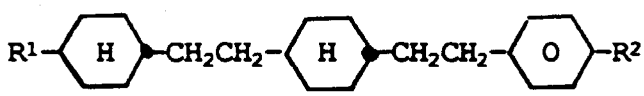

II17

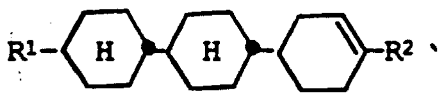

II18

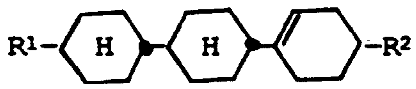

II19

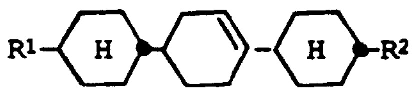

II20

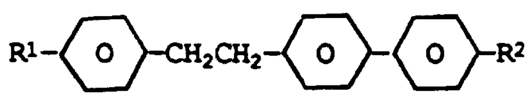

II21

worin $R^1$ und $R^2$ die in Anspruch 1 angegebene Bedeutung haben und die 1,4-Phenylengruppen in II8 bis II17 und II21 jeweils unabhängig voneinander auch durch Fluor ein- oder mehrfach substituiert sein können.

- Komponente B enthält zusätzlich eine oder mehrere Verbindungen ausgewählt aus der Gruppe bestehend aus II22 bis II27,

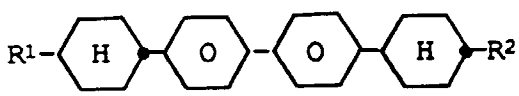

II22

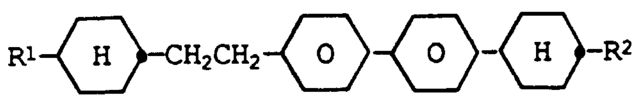

II23

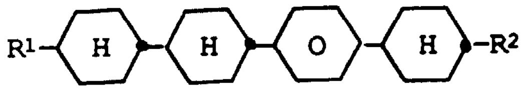

II24

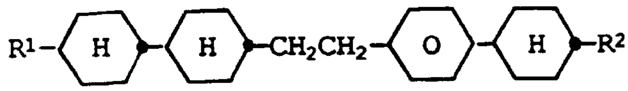

II25

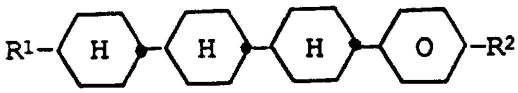

II26

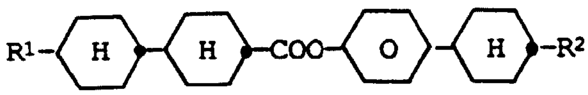

II27

worin $R^1$ und $R^2$ die in Anspruch 1 angegebene Bedeutung haben und die 1,4-Phenylengruppen in II22 bis II27 jeweils unabhängig voneinander auch durch Fluor ein- oder mehrfach substituiert sein können.

- Komponente B enthält eine oder mehrere Verbindungen ausgewählt aus der Gruppe bestehend aus II28 und II29:

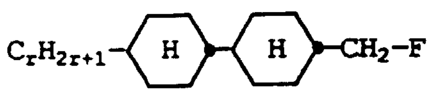

II28

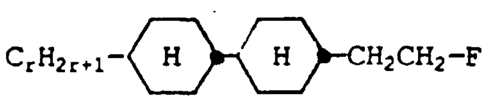

II29

worin $C_rH_{2r+1}$ eine geradkettige Alkylgruppe mit bis zu 7 C-Atomen ist.

- Die Flüssigkristallmischung enthält neben den Komponenten A, B, C und D zusatzlich: eine oder mehrere Verbindungen ausgewählt aus der Gruppe bestehend aus III und IV,

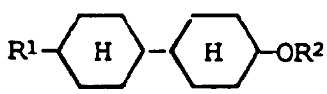

III

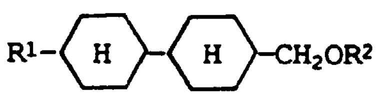

IV

worin $R^1$ und $R^2$ die in Anspruch 1 angegebene Bedeutung haben.

- Die Flüssigkristallmischung enthält neben den Komponenten A, B, C und D zusätzlich eine oder mehrere Verbindungen ausgewählt aus der Gruppe bestehend aus V und VI,

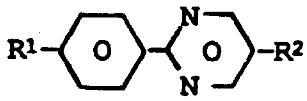

V

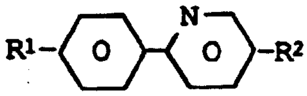

VI

worin $R^1$ und $R^2$ die in Anspruch 1 angegebene Bedeutung haben.

- Die Komponente C enthält eine oder mehrere Verbindungen ausgewählt aus der Gruppe bestehend aus VII bis XI,

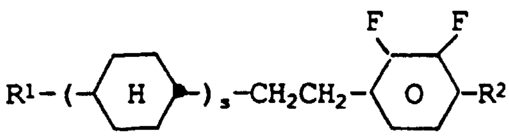

VII

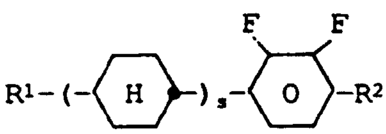

VIII

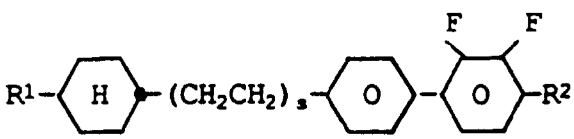

IX

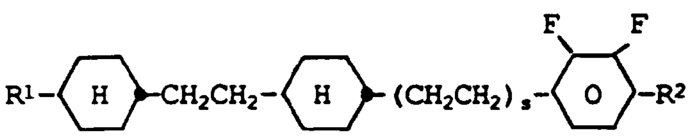

X

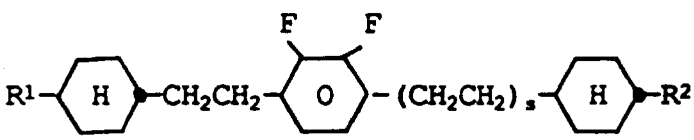

XI

worin $R^1$ und $R^2$ die in Anspruch 1 angegebene Bedeutung haben und s 0 oder 1 ist.

- Die Komponente B enthält eine oder mehrere Verbindungen ausgewählt aus der Gruppe bestehend aus XII bis XIV,

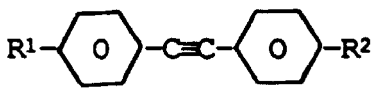

XII

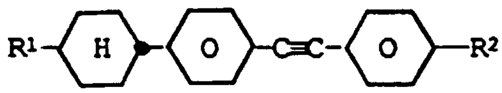

XIII

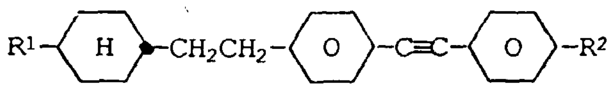

XIV

worin $R^1$ und $R^2$ die in Anspruch 1 angegebene Bedeutung haben.

Bevorzugt sind Mischungen, welche ausschließlich Verbindungen der Formeln IIa bis IIh (Gruppe A) und Komponenten C und D enthalten, d.h. keine Verbindungen der Komponente B.

Die bevorzugten Mischungen enthaltend terminal halogenisierte Verbindungen der Formeln IIa bis IIk (X = F, Cl, $-CF_3$, $-CHF_2$, $-OCF_3$ oder $-OCHF_2$) weisen besonders günstige Parameterkombinationen und gleichzeitig ein breites d/p-Fenster auf.

Erfindungsgemäße Flüssigkristallmischungen, deren Komponente A mindestens eine Verbindung der Formel T3

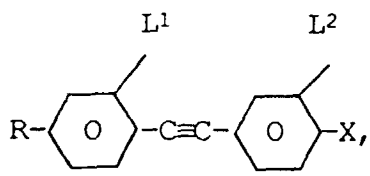

T3

worin

R $-C_nH_{2n+1}$, $-OC_nH_{2n+1}$,

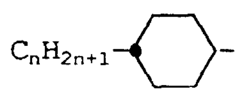

oder

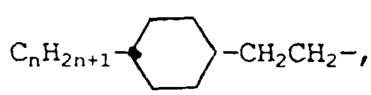

n eine ganze Zahl von 1-15, und

$L^1$ und $L^2$ jeweils unabhängig voneinander H oder F, und

X F, Cl oder $OCF_3$

bedeuten,

sind bevorzugt. Insbesondere solche Mischungen die eine Verbindung der Formel T3 und eine Verbindung der Formeln IId1-IId2, IIa1-IIa3 und IIf1-IIf3 enthalten, weisen günstige Werte für die Schwellenspannung $V_{10/0/20}$ und die Fließvis-

kosität $\eta$ auf und sind durch relativ hohe oder hohe Werte für die optische Anisotropie gekennzeichnet. Da wegen des relativ hohen Wertes für $\Delta n$ die Schichtdicke d relativ klein gewählt werden kann, sind mit diesen besonders bevorzugten Mischungen betriebene Displays i.a. durch günstige Werte für die Ein- und/oder Ausschaltzeiten $t_{on}$ und/ oder $t_{off}$ gekennzeichnet. Diese Mischungen sind bevorzugt.

Die erfindungsgemäßgen Mischungen zeichnen sich insbesondere beim Einsatz in SFA's mit hohen Schichtdicken durch sehr niedrige Summenschaltzeiten aus (= $t_{on}$ + $t_{off}$).

Niedrige Summenschaltzeiten sind insbesondere ein wichtiges Kriterium für SFA's beim Einsatz als Anzeigen von Laptops, um Cursorbewegungen störungsfrei darstellen zu können.

Für die Komponente D stehen dem Fachmann eine Vielzahl, zum Teil kommerziell erhältlicher chiraler Dotierstoffe zur Verfügung. Deren Wahl ist an sich nicht kritisch.

Die in den erfindungsgemäßen SFA's verwendeten Flüssigkristallmischungen sind dielektrisch positiv mit $\Delta\varepsilon \geq 1$. Besonders bevorzugt sind Flüssigkristallmischungen mit $\Delta\varepsilon \geq 3$ und ganz besonders solche mit $\Delta\varepsilon \geq 5$.

Die erfindungsgemäßen Flüssigkristallmischungen weisen günstige Werte für die Schwellenspannung $V_{10/0/20}$ und für die Fließviskosität $\eta$ auf. Ist der Wert für den optischen Wegunterschied d.$\Delta n$ vorgegeben, wird der Wert für die Schichtdicke d durch die optische Anisotropie $\Delta n$ bestimmt. Insbesondere bei relativ hohen Werten für d.$\Delta n$ ist i.a. die Verwendung erfindungsgemäßer Flüssigkristallmischungen mit einem relativ hohen Wert für die optische Anisotropie bevorzugt, da dann der Wert für d relativ klein gewählt werden kann, was zu günstigeren Werten für die Schaltzeiten führt. Aber auch solche erfindungsgemäßen Flüssigkristallanzeigen, die erfindungsgemäße Flüssigkristallmischungen mit kleineren Werten für $\Delta n$ enthalten, sind durch vorteilhafte Werte für die Schaltzeiten gekennzeichnet. Die erfindungsgemäßen Flüssigkristallmischungen sind weiter durch vorteilhafte Werte für die Steilheit der elektrooptischen Kennlinie gekennzeichnet und können mit hohen Multiplexraten betrieben werden. Darüberhinaus weisen die erfindungsgemäßen Flussigkristallmischungen eine hohe Stabilität und günstige Werte für den elektrischen Widerstand und die Frequenzabhängigkeit der Schwellenspannung auf. Die erfindungsgemäßen Flüssigkristallanzeigen weisen einen großen Arbeitstemperaturbereich und eine gute Winkelabhängigkeit des Kontrastes auf.

Der Aufbau der erfindungsgemäßen Flüssigkristall-Anzeigeelemente aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 361° gegeneinander verdreht ist, entspricht der für derartige Anzeigeelemente üblichen Bauweise. Dabei ist der Begriff der üblichen Bauweise hie or weit gefaßt und umfaßt auch alle Abwandlungen und Modifikationen der Supertwistzelle, insbesondere auch Matrix-Anzeigeelemente sowie die zusätzliche Magnete enthaltenden Anzeigeelemente nach der DE-OS 2 748 738. Der Oberflächentiltwinkel an den beiden Trägerplatten kann gleich oder verschieden sein. Gleiche Tiltwinkel sind bevorzugt.

Ein wesentlicher Unterschied der erfindungsgemäßen Anzeigeelemente zu den bisher üblichen auf der Basis der verdrillten nematischen Zelle besteht jedoch in der Wahl der Flüssigkristallkomponenten der Flüssigkristallschicht.

Die Herstellung der erfindungsgemäß verwendbaren Flüssigkristallmischungen erfolgt in an sich üblicher Weise.

In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

Zur Anpassung der Materialparameter an die jweiligen Anzeigenparameter werden die erfindungsgemäßen Medien in einer besonders bevorzugten Ausführungsform durch Mischen von sogenannten "Multi-Bottle-Systemen" hergestellt. Gewöhnlich erlaubt ein "Zwei- oder Multi-Bottle-System" das Einstellen der erforderlichen optischen Anisotropie entsprechend der Schichtdicke der SFA-Anzeigen.

Darüber hinaus erlaubt das erfindungsgemäße "Multi-Bottle-System" die Einstellung der Steilheit und des Schaltverhaltens bei vorgegebener Schwellenspannung durch Adjustierung der elastischen Konstanten, insbesondere von $K_3/K_1$.

Demzufolge ist weiterhin Gegenstand der Erfindung ein flüssigkristallines Medium basierend auf Komponente A enthaltend eine oder mehrere Verbindungen der Formel IIa, eine oder mehrere Verbindungen der Formeln IIc bis IIe und eine oder mehrere Verbindungen der Formeln IIf bis IIh, wobei es in Form eines gebrauchsfertigen Sets aus zwei oder mehreren, vorzugsweise vier Komponenten mit gleicher Schwellenspannung vorliegt, dessen eine Komponente eine optische Anisotropie von 0,100-0,110 aufweist, und die andere eine optische Anisotropie von 0,170 bis 0,180 aufweist.

Besonders bevorzugt ist ein 4-Komponenten-Set, wobei alle 4 Komponenten etwa die gleiche Schwellenspannung aufweisen und jeweils zwei Komponenten gleiche optische Anisotropie aber unterschiedliche $K_3/K_1$-Werten aufweisen. Mit diesem "4-Bottle-System" lassen sich gezielt Mischungen mit allen Parametern, d.h. mit gleicher Schwellenspannung, optischer Anisotropie zwischen 0,100 und 0,180 und $K_3/K_1$-Werten zwischen 1,0 und 1,6 herstellen.

Die folgenden Beispiele sollen die Erfindung erläutern, ohne sie zu begrenzen.
Es bedeutet:

| | |
|---|---|
| S-N | Phasenübergangs-Temperatur smektisch-nematisch, |
| N-I | Phasenübergangs-Temperatur nematisch-isotrop, |
| Klp. | Klärpunkt, |
| Visk. | Viskosität (m Pa.s), |
| $T_{on}$ | Zeit vom Einschalten bis zur Erreichung von 90 % des maximalen Kontrastes |
| $T_{off}$ | Zeit vom Ausschalten bis zur Erreichung von 10 % des maximalen Kontrastes |

Die SFA wird im Multiplexbetrieb angesteuert (Multiplexverhältnis 1:240, Bias 1:16, Betriebsspannung 18,5 Volt).

Vor- und nachstehend sind alle Temperaturen in °C angegeben. Die Prozentzahlen sind Gewichtsprozente. Die Werte für die Schaltzeiten und Viskositäten beziehen sich auf 20 °C.

Beispiel 1

Ein SFA vom Typ STN mit folgenden Parametern,

| | |
|---|---|
| Verdrillungswinkel | 240° |
| Anstellwinkel | 5° |
| d | 7,7 µm |

enthaltend eine Flüssigkristallmischung mit folgenden Parametern

| | |
|---|---|
| Klärpunkt | 72° |
| Δn | 0,1152 |

und bestehend aus einer Basismischung aus

| | |
|---|---|
| 7,0 % | PCH-2 |
| 18,0 % | PCH-3 |
| 10,0 % | PCH-4 |
| 3,0 % | ME2N.F |
| 4,0 % | PYP-31 |
| 4,0 % | PYP-32 |
| 5,0 % | PYP-33 |
| 4,0 % | PYP-34 |
| 7,0 % | CCP-2OCF3 |
| 7,0 % | CCP-3OCF3 |
| 7,0 % | CCP-4OCF3 |
| 7,0 % | CCP-5OCF3 |
| 4,0 % | ECCP-33 |
| 5,0 % | ECCP-3F |
| 5,0 % | ECCP-5F |
| 3,0 % | CCPC-33 |

und einer chiralen Komponente (p-(p-n-Hexylbenzoyloxy)benzoesäure-2-octylester) zeigt folgende Schaltzeiten:

| | |
|---|---|
| $t_{on}$ | 260 ms |
| $t_{off}$ | 240 ms |
| $t_{on} + t_{off}$ | 500 ms |

Beispiel 2

Ein SFA vom Typ STN mit folgenden Parametern,

| | |
|---|---|
| Verdrillungswinkel | 240° |
| Anstellwinkel | 5° |
| d | 8,0 µm |

enthaltend eine Flüssigkristallmischung mit folgenden Parametern,

| | |
|---|---|
| Klärpunkt | 71° |
| Δn | 0,1126 |

und bestehend aus einer Basismischung aus

| | | | |
|---|---|---|---|
| 7,0 % | PCH-2 | | |
| 18,0 % | PCH-3 | | |
| 5,0 % | PCH-4 | | |
| 4,0 % | PYP-2F | | |
| 4,0 % | PYP-3F | 7,0 % | ECCP-3F |
| 3,0 % | PYP-31 | 7,0 % | ECCP-5F |
| 3,0 % | PYP-32 | 4,0 % | CCPC-33 |
| 4,0 % | PYP-33 | | |
| 4,0 % | PYP-34 | | |
| 8,0 % | CCP-2OCF3 | | |
| 8,0 % | CCP-3OCF3 | | |
| 7,0 % | CCP-4OCF3 | | |
| 7,0 % | CCP-5OCF3 | | |

und einer chiralen Komponente (vgl. Beispiel 1) zeigt folgende Schaltzeiten:

| | |
|---|---|
| $t_{on}$ | 260 ms |
| $t_{off}$ | 290 ms |
| $t_{on} + t_{off}$ | 550 ms |

Beispiel 3

Ein SFA vom Typ STN mit folgenden Parametern:

| | |
|---|---|
| Verdrillungswinkel | 240° |
| Anstellwinkel | 5° |
| d | 7, 9 µm |

enthaltend eine Flüssigkristallmischung mit folgenden Parametern:

| | |
|---|---|
| Klärpunkt | 70° |
| Δn | 0,1098 |

und bestehend aus einer Basismischung aus:

| | |
|---|---|
| 5,0 % | PCH-2 |
| 20,0 % | PCH-3 |
| 5,0 % | PCH-4 |

(fortgesetzt)

| | |
|---|---|
| 4,0 % | PYP-2F |
| 4,0 % | PYP-3F |
| 2,0 % | PYP-31 |
| 3,0 % | PYP-32 |
| 4,0 % | PYP-33 |
| 4,0 % | PYP-34 |
| 3,0 % | CCH-3O3 |
| 7,0 % | CCP-2OCF3 |
| 7,0 % | CCP-3OCF3 |
| 7,0 % | CCP-4OCF3 |
| 7,0 % | CCP-5OCF3 |
| 7,0 % | ECCP-3F |
| 7,0 % | ECCP-5F |
| 4,0 % | CCPC-33 |

und einer chiralen Komponente (vgl. Beispiel 1) zeigt folgende Schaltzeiten:

| | |
|---|---|
| $t_{on}$ | 300 ms |
| $t_{off}$ | 310 ms |
| $t_{on} + t_{off}$ | 610 ms. |

Beispiel 4

Eine Flüssigkristallmischung bestehend aus:

| | | |
|---|---|---|
| PCH-2 | 6,0 % | S < -20 N 71 I |
| PCH-3 | 19,0 % | |
| PCH-4 | 5,0 % | Δn 0.1068 |
| PCH-301 | 7,0 % | |
| CCP-20CF3 | 8,0 % | Viskosität bei 20° 15 mPa.s |
| CCP-30CF3 | 8,0 % | |
| CCP-40CF3 | 7,0 % | |
| CCP-50CF3 | 7,0 % | |
| PYP-2F | 4,0 % | |
| PYP-3F | 4,0 % | |
| PYP-31 | 3,0 % | |
| PYP-33 | 4,0 % | |
| ECCP-3F | 7,0 % | |
| ECCP-5F | 7,0 % | |
| CCPC-33 | 4,0 % | |

und einer chiralen Komponente (vgl. Beispiel 1) ergibt in einer SFA vom Typ STN (Parameter vgl. Beispiel 1) eine Schwellenspannung von 1,89 V.

Beispiel 5

Eine Flüssigkristallmischung bestehend aus:

| | | |
|---|---|---|
| PCH-2 | 8,0 % | S < -40 N 73 I |
| PCH-3 | 20,0 % | |
| PCH-4 | 7,0 % | Δn 0.1073 |

(fortgesetzt)

| | | |
|---|---|---|
| PCH-5 | 4,0 % | |
| PYP-32 | 5,0 % | Viskosität bei 20° 17 mPa.s |
| PYP-33 | 4,0 % | |
| CCP-20CF3 | 8,0 % | |
| CCP-30CF3 | 8,0 % | |
| CCP-40CF3 | 7,0 % | |
| CCP-50CF3 | 7,0 % | |
| ECCP-30CF3 | 5,0 % | |
| ECCP-50CF3 | 5,0 % | |
| ECCP-3F.F | 6,0 % | |
| ECCP-5F.F | 6,0 % | |

und einer chiralen Komponente (vgl. Beispiel 1) ergibt in einer SFA vom Typ STN (Parameter vgl. Beispiel 1) eine Schwellenspannung von 1,89 V.

Beispiel 6

Eine Flüssigkristallmischung bestehend aus:

| | | |
|---|---|---|
| PCH-3 | 10,0 % | S < -30 N 73 I |
| K6 | 7,0 % | |
| K9 | 8,0 % | Δn 0.1720 |
| PCH-301 | 11,0 % | |
| PYP-31 | 4,0 % | Viskosität bei 20° 19 mPa.s |
| PYP-32 | 5,0 % | |
| PYP-33 | 4,0 % | |
| PTP-20F | 6,0 % | |
| PTP-40F | 6,0 % | |
| CCP-30CF3 | 6,0 % | |
| CCP-50CF3 | 6,0 % | |
| ECCP-30CF3 | 5,0 % | |
| ECCP-50CF3 | 5,0 % | |
| CPTP-30CF3 | 6,0 % | |
| CPTP-50CF3 | 6,0 % | |
| CPTP-302 | 5,0 % | |

und einer chiralen Komponente (vgl. Beispiel 1) ergibt in einer SFA vom Typ STN (Parameter vgl. Beispiel 1) eine Schwellenspannung von 1,91 V.

Beispiel 7

Eine Flüssigkristallmischung bestehend aus

| | | |
|---|---|---|
| PCH-3 | 20,0 % | Klärpunkt +91 °C |
| PCH-5 | 8,0 % | Δn +0,1280 |
| PYP-3F | 3,0 % | |
| PYP-5F | 3,0 % | |
| PYP-31 | 5,0 % | |
| PYP-32 | 5,0 % | |
| PYP-33 | 5,0 % | |
| CCP-20CF3 | 6,0 % | |

(fortgesetzt)

| | | |
|---|---|---|
| CCP-30CF3 | 6,0 % | |
| CCP-40CF3 | 6,0 % | |
| CCP-50CF3 | 6,0 % | |
| ECCP-30CF3 | 6,0 % | |
| ECCP-50CF3 | 6,0 % | |
| CBC-33F | 5,0 % | |
| CBC-53F | 5,0 % | |
| CBC-55F | 5,0 % | |

und einer chiralen Komponente (vgl. Beispiel 1) ergibt in einer SFA vom Typ STN (Parameter vgl. Beispiel 1) eine Schwellenspannung von 2.13 V.

Beispiel 8

Eine Flüssigkristallmischung bestehend aus

| | | |
|---|---|---|
| PCH-3 | 16,0 % | Klärpunkt +85 °C |
| PCH-5 | 7,0 % | Δn +0,1182 |
| PYP-3F | 5,0 % | |
| PYP-5F | 5,0 % | |
| PCH-302 | 4,0 % | |
| PYP-31 | 5,0 % | |
| PYP-32 | 5,0 % | |
| PYP-33 | 5,0 % | |
| CCP-20CF3 | 6,0 % | |
| CCP-30CF3 | 6,0 % | |
| CCP-40CF3 | 6,0 % | |
| CCP-50CF3 | 6,0 % | |
| ECCP-30CF3 | 6,0 % | |
| ECCP-50CF3 | 6,0 % | |
| CCPC-33 | 4,0 % | |
| CCPC-34 | 4,0 % | |
| CCPC-35 | 4,0 % | |

und einer chiralen Komponente (vgl. Beispiel 1) ergibt in einer SFA vom Typ STN (Parameter vgl. Beispiel 1) eine Schwellenspannung von 2.06 V.

Beispiel 9

Eine Flüssigkristallmischung bestehend aus

| | | |
|---|---|---|
| PCH-3 | 10,0 % | Klärpunkt +82 °C |
| PYP-3F | 10,0 % | Δn +0,1185 |
| PYP-5F | 8,0 % | |
| PCH-301 | 6,0 % | |
| PYP-31 | 5,0 % | |
| PYP-32 | 5,0 % | |
| PYP-33 | 5,0 % | |
| CCP-20CF3 | 6,0 % | |
| CCP-30CF3 | 6,0 % | |
| CCP-40CF3 | 6,0 % | |

(fortgesetzt)

| | | |
|---|---|---|
| CCP-50CF3 | 6,0 % | |
| ECCP-30CF3 | 6,0 % | |
| ECCP-50CF3 | 6,0 % | |
| CCPC-33 | 5,0 % | |
| CCPC-34 | 5,0 % | |
| CCPC-35 | 5,0 % | |

und einer chiralen Komponente (vgl. Beispiel 1) ergibt in einer SFA vom Typ STN (Parameter vgl. Beispiel 1) eine Schwellenspannung von 2.19 V.

Beispiel 11

Eine Flüssigkristallmischung bestehend aus

| | | |
|---|---|---|
| PCH-3 | 19,0 % | Klärpunkt +88 °C |
| PCH-301 | 4,0 % | Δn +0,1143 |
| CCP-20CF3 | 6,0 % | |
| CCP-30CF3 | 6,0 % | |
| CCP-40CF3 | 6,0 % | |
| CCP-50CF3 | 6,0 % | |
| ECCP-30CF3 | 7,0 % | |
| ECCP-50CF3 | 7,0 % | |
| PYP-3F | 8,0 % | |
| PYP-5F | 7,0 % | |
| PYP-32 | 5,0 % | |
| PYP-33 | 5,0 % | |
| CCPC-33 | 5,0 % | |
| CCPC-34 | 4,0 % | |
| CCPC-35 | 5,0 % | |

und einer chiralen Komponente (vgl. Beispiel 1).

Beispiel 12

Eine Flüssigkristallmischung bestehend aus

| | | |
|---|---|---|
| PCH-3 | 16,0 % | Klärpunkt +84 °C |
| PYP-3F | 5,0 % | Δn +0,1774 |
| K9 | 8,0 % | |
| PCH-301 | 7,0 % | |
| PYP-31 | 4,0 % | |
| PYP-32 | 4,0 % | |
| PYP-33 | 4,0 % | |
| PTP-102 | 5,0 % | |
| PTP-201 | 5,0 % | |
| CCP-30CF3 | 6,0 % | |
| CCP-50CF3 | 6,0 % | |
| ECCP-30CF3 | 6,0 % | |
| ECCP-50CF3 | 6,0 % | |
| CPTP-301 | 6,0 % | |
| CPTP-302 | 6,0 % | |

(fortgesetzt)

| | | |
|---|---|---|
| CPTP-303 | 6,0 % | |

und einer chiralen Komponente (vgl. Beispiel 1).

Beispiel 14

Man stellt ein "4-Bottle-System" her bestehend aus den Komponenten A, B, C und D

| A | | B | |
|---|---|---|---|
| PCH-2 | 8,0 % | PCH-3 | 10,0 % |
| PCH-3 | 20,0 % | K6 | 7,0 % |
| PCH-4 | 7,0 % % | K9 | 8,0 % |
| PCH-5 | 4,0 % | PCH-301 | 11,0 % |
| PYP-32 | 5,0 % | PYP-31 | 4,0 % |
| PYP-33 | 4,0 % | PYP-32 | 5,0 % |
| CCP-20CF3 | 8,0 % | PYP-33 | 4,0 % |
| CCP-30CF3 | 8,0 % | PTP-20F | 6,0 % |
| CCP-40CF3 | 7,0 % | PTP-40F | 6,0 % |
| CCP-50CF3 | 7,0 % | CCP-30CF3 | 6,0 % |
| ECCP-30CF3 | 5,0 % | CCP-50CF3 | 6,0 % |
| ECCP-50CF3 | 5,0 % | ECCP-30CF3 | 5,0 % |
| ECCP-3F.F | 6,0 % | ECCP-50CF3 | 5,0 % |
| ECCP-5F.F | 6,0 % | CPTP-30CF3 | 6,0 % |
| | | CPTP-50CF3 | 6,0 % |
| | | CPTP-302 | 5,0 % |
| **C** | | **D** | |
| PCH-2 | 5,0 % | PCH-3 | 18,0 % |
| PCH-3 | 20,0 % | PCH-5 | 7,0 % |
| PCH-5 | 8,0 % | K6 | 10,0 % |
| PCH-301 | 16,0 % | PCH-301 | 14,0 % |
| ME2N.F | 3,0 % | PCH-302 | 8,0 % |
| ME3N.F | 3,0 % | ME2N.F | 2,0 % |
| CCP-20CF3 | 5,0 % | ME3N.F | 2,0 % |
| CCP-30CF3 | 5,0 % | PTP-102 | 6,0 % |
| CCP-40CF3 | 5,0 % | PTP-201 | 6,0 % |
| CCP-50CF3 | 5,0 % | CPTP-301 | 6,0 % |
| ECCP-30CF3 | 5,0 % | CPTP-302 | 5,0 % |
| ECCP-50CF3 | 5,0 % | CPTP-303 | 6,0 % |
| ECCP-3F.F | 5,0 % | ECCP-3F | 3,0 % |
| ECCP-5F.F | 5,0 % | CCP-30CF3 | 4,0 % |
| CBC-53 | 5,0 % | CCP-50CF3 | 3,0 % |

Komponente A weist folgende Parameter auf:

| | |
|---|---|
| S < -40 K 73 I | |
| Viskosität (+20 °C) | 17 $mm^2/s$ |
| $\Delta n$ | 0,1703 |
| $\Delta\varepsilon$ | 10,0 |
| $V_{th}$ | 1,89 |

(fortgesetzt)

| | |
|---|---|
| Steilheit [= $(V_{th}/V_{10}{}^{-1}) \cdot 100$] | 10,05 % |

Komponente B weist folgende Parameter auf:

| | |
|---|---|
| S < -30 K 73 I | |
| Viskosität (20 °C) | 19 $mm^2/s$ |
| $\Delta n$ | 0,1720 |
| $\Delta\varepsilon$ | 9,3 |
| $V_{th}$ | 1,91 |
| Steilheit [= $(V_{th}/V_{10}{}^{-1}) \cdot 100$] | 13,09 % |
| $T_{on} + T_{off}/2$ | 85 ms |

Komponente C weist folgende Parameter auf:

| | |
|---|---|
| S < -40 K 74 I | |
| Viskosität (20 °C) | 17 $mm^2/s$ |
| $\Delta n$ | 0,1063 |
| $\Delta\varepsilon$ | 10,5 |
| $V_{th}$ | 1,86 |
| Steilheit [= $(V_{th}/V_{10}{}^{-1}) \cdot 100$] | 7,28 % |

Komponente D weist folgende Parameter auf:

| | |
|---|---|
| S < -20 K 73 I | |
| Viskosität (20 °C) | 18 $mm^2/s$ |
| $\Delta n$ | 0,1708 |
| $\Delta\varepsilon$ | 9,9 |
| $V_{th}$ | 1,85 |
| Steilheit [= $(V_t/V_{10}{}^{-1}) \cdot 100$] | 5,96 % |
| $T_{on} + T_{off}/2$ | 120 ms |

Durch Mischen von Komponente B und D erhält man Mischungen mit folgenden Parametern (gemessen in einer 240° STN-Zelle, d = 6 µm) ;

Tabelle I

| Komponente (%) | | Steilheit (%) | $V_{th}$ (V) | $T_{on} + T_{off}/2$ (mS) |
|---|---|---|---|---|
| B | D | | | |
| 75 | 25 | 10,7 | 1,87 | 100 |
| 50 | 50 | 9,5 | 1,85 | 108 |
| 25 | 75 | 8,7 | 1,82 | 115 |

Durch Mischen von Komponente A mit B erhält man Mischungen mit folgenden Parametern (gemessen in einer 240° STN-Zelle/ Schichtdicke 6,5 µm).

Tabelle II

| Komponente (%) | | $\Delta n$ | Steilheit (%) | $V_{th}$ (v) | $T_{on} + T_{off}/2$ (ms) |
|---|---|---|---|---|---|
| A | B | | | | |
| 37 | 63 | 0,13 | 1,88 | 11,1 | 183 |
| 50 | 50 | 0,13 | 1,90 | 11,3 | 150 |

Das neue "4-Bottle-System" ergibt SFA mit Smmenschaltzeiten < 250 ms bei einer Schichtdicke von 6 µm < 200 ms bei 5 µm, < 400 ms bei 7 µm und < 600 ms bei 8 µm, sowie breite d/p-Festern selbst bei hohen Twist-Winkeln.

Beispiel 15

Man stellt ein "4-Bottle-System" her bestehend aus den Komponenten E, F, G und H:

| E | | F | |
|---|---|---|---|
| PCH-3 | 19,0 % | PCH-3 | 8,0 % |
| PCH-4 | 8,0 % | K6 | 8,0 % |
| PCH-5 | 8,0 % | K9 | 8,0 % |
| PCH-301 | 7,0 % | PCH-301 | 12,0 % |
| CCP-20CF3 | 6,0 % | PYP-31 | 5,0 % |
| CCP-30CF3 | 6,0 % | PYP-32 | 5,0 % |
| CCP-40CF3 | 6,0 % | PYP-33 | 5,0 % |
| CCP-50CF3 | 6,0 % | PTP-201 | 4,0 % |
| ECCP-30CF3 | 7,0 % | CCP-30CF3 | 7,0 % |
| ECCP-50CF3 | 7,0 % | CCP-50CF3 | 7,0 % |
| PYP-32 | 6,0 % | ECCP-30CF3 | 7,0 % |
| PYP-33 | 6,0 % | ECCP-50CF3 | 7,0 % |
| CCPC-33 | 4,0 % | CPTP-301 | 6,0 % |
| CCPC-34 | 4,0 % | CPTP-302 | 5,0 % |
| | | CPTP-303 | 6,0 % |
| **G** | | **H** | |
| PCH-3 | 29,0 % | PCH-3 | 17,0 % |
| PCH-4 | 9,0 % | K6 | 6,0 % |
| PCH-5 | 9,0 % | K9 | 7,0 % |
| PCH-301 | 15,0 % | PCH-301 | 20,0 % |
| CCP-20CF3 | 6,0 % | PTP-102 | 6,0 % |
| CCP-30CF3 | 6,0 % | PTP-201 | 6,0 % |
| CCP-40CF3 | 6,0 % | CCP-30CF3 | 6,0 % |
| CCP-50CF3 | 6,0 % | CCP-50CF3 | 6,0 % |
| ECCP-30CF3 | 7,0 % | ECCP-30CF3 | 5,0 % |
| ECCP-50CF3 | 7,0 % | ECCP-50CF3 | 5,0 % |
| CBC-33F | 4,0 % | CPTP-301 | 5,0 % |
| CBC-53F | 5,0 % | CPTP-302 | 6,0 % |
| | | CPTP-303 | 5,0 % |

Komponente E weist folgende Parameter auf:

| | |
|---|---|
| S →N | < - 40 °C |
| Klärpunkt | + 83 °C |
| Viskosität (+20 °C) | 18 $mm^2/s$ |
| $\Delta n$ | + 0,1110 |
| $\Delta\varepsilon$ | + 8,8 |
| $V_{th}$ | 2,09 V |

Komponente F weist folgende Parameter auf:

| | |
|---|---|
| S →N | < - 30 °C |
| Klärpunkt | + 86 °C |

(fortgesetzt)

| | |
|---|---|
| Viskosität (+20 °C) | 20 $mm^2/s$ |
| Δn | + 0,1701 |
| Δε | + 8,3 |
| Vth | 2,09 V |

Komponente G weist folgende Parameter auf:

| | |
|---|---|
| S →N | < - 40 °C |
| Klärpunkt | + 85 °C |
| Viskosität (+20 °C) | 17 $mm^2/s$ |
| Δn | + 0,1076 |
| Δε | + 8,6 |
| $V_{th}$ | 2,18 V |

Komponente H weist folgende Parameter auf:

| | |
|---|---|
| S →N | < - 30 °C |
| Klärpunkt | + 84 °C |
| Viskosität (+20 °C) | 16 $mm^2/s$ |
| Δn | + 0,01705 |
| Δε | + 8,3 |
| $V_{th}$ | 2,12 V |

Durch Mischen von Komponente E und F erhält man Mischungen mit folgenden Parametern:

Tabelle I

| Komponente (%) | | Viskosität (20 °C) [$mm^2/s$] | Δn | Δε | $V_{th}$ [V] | $\frac{T_{on} + T_{off}}{2}$ [ms] |
|---|---|---|---|---|---|---|
| E | F | | | | | |
| 75 | 25 | 18,1 | 0,1255 | 8,7 | 2,09 | 215 |
| 50 | 50 | 18,7 | 0,1397 | 8,6 | 2,09 | 155 |
| 25 | 75 | 19,3 | 0,1546 | 8,5 | 2,09 | 125 |

Durch Mischen von Komponente F mit H erhält man Mischungen mit folgenden Parametern:

Tabelle II

| Komponente (%) | | Viskosität (20 °C) [$mm^2/s$] | Δn | Δε | $V_{th}$ [V] | $\frac{T_{on} + T_{off}}{2}$ [ms] |
|---|---|---|---|---|---|---|
| F | H | | | | | |
| 75 | 25 | 18,6 | 0,1699 | 8,3 | 2,10 | 110 |
| 50 | 50 | 17,5 | 0,1697 | 8,3 | 2,12 | 115 |
| 25 | 75 | 17,o | 0,1701 | 8,3 | 2,12 | 130 |

PCH-53: trans-1-p-Propylphenyl-4-pentylcyclohexan
I-32: 1-(trans-4-Propylcyclohexyl)-2-(4'-ethyl-2'-fluorbiphenyl-4-yl)-ethan
I-35: 1-(trans-4-Propylcyclohexyl)-2-(4'-pentyl-2'-fluorbiphenyl-4-yl)-ethan
BCH-32: 4-Ethyl-4'-(trans-4-propylcyclohexyl)biphenyl
BCH-52: 4-Ethyl-4'-(trans-4-pentylcylcohexyl)biphenyl
CCH-303: trans,trans-4-Propoxy-4'-propylcyclohexylcyclohexan

| | |
|---|---|
| CCH-501: | trans,trans-4-Methoxy-4'-pentylclyclohexylcyclohexan |
| CH-35: | trans,trans-4-Propylcyclohexylcyclohexancarbonsäure-trans-4-pentylcyclohexylester |
| CH-43: | trans,trans-4-Butylcyclohexylcyclohexancarbonsäure-trans-4-propylcyclohexylester |
| CH-45: | trans,trans-4-Butylcyclohexylcyclohexancarbonsäure-trans-4-pentylcyclohexylester |
| PCH-302: | trans-1-p-Ethoxyphenyl-4-propylcyclohexan |
| PCH-303: | trans-1-p-Propoxyphenyl-4-propylcyclohexan |
| PCH-304: | trans-1-p-Butoxyphenyl-4-propylcyclohexan |
| CCH-502: | trans,trans-4-Ethoxy-4'-pentylcyclohexylcyclohexan |
| ECCP-32: | 1-[trans-4-(trans-4-Propylcyclohexyl)-cyclohexyl]-2-(p-ethylphenyl)-ethan |
| ECCP-31: | 1-[trans-4-(trans-4-Propylcyclohexyl)-cyclohexyl]-2-(p-methylphenyl)-ethan |
| ECCP-35: | 1-[trans-4-(trans-4-Propylcyclohexyl)-cyclohexyl]-2-(p-pentylphenyl)-ethan |
| PCH-501: | trans-1-p-Methoxyphenyl-4-pentylcyclohexan |
| PCH-502: | trans-1-p-Ethoxyphenyl-4-pentylcyclohexan |
| CP-33: | trans,trans-4-Propylcyclohexylcyclohexancarbonsäure-p-propylphenylester |
| CP-35: | trans,trans-4-Propylcyclohexylcyclohexancarbonsäure-p-pentylphenylester |
| CP-43: | trans,trans-4-Butylcyclohexylcyclohexancarbonsäure-p-propylphenylester |
| CP-45: | trans,trans-4-Butylcyclohexylcyclohexancarbonsäure-p-pentylphenylester |
| PTP-40F: | 4-Butoxy-4'-fluortolan |
| PTP-50F: | 4-Pentoxy-4'-fluortolan |
| PTP-20F: | 4-Ethoxy-4'-fluortolan |
| PCH-301: | trans-1-p-Methoxyphenyl-4-propylcyclohexan |
| CCH-301: | trans,trans-4-Methoxy-4'-propylcyclohexylcyclohexan |
| CBC-33F: | 4,4'-Bis-(trans-4-propylcyclohexyl)-2-fluorbiphenyl |
| CBC-55F: | 4,4'-Bis-(trans-4-pentylcyclohexyl)-2-fluorbiphenyl |
| CBC-53F: | 4-(trans-4-Pentylcyclohexyl)-4'-(trans-4-propylcyclcohexyl)-2-fluorbiphenyl |
| CBC-33: | 4,4'-Bis-(trans-4-propylcyclohexyl)-biphenyl |
| CBC-55: | 4,4'-Bis-(trans-4-pentylcyclohexyl)-biphenyl |
| CBC-53: | 4-(trans-4-Pentylcyclohexyl)-4'-(trans-4-propylcyclohexyl)-biphenyl |
| ECCP-33: | 1-[trans-4-(trans-4-Propylcyclohexyl)-cyclohexyl]-2-(p-propylphenyl)-ethan |
| CCH-51F: | trans,trans-4-Fluormethyl-4'-pentylcyclohexylcyclohexan |
| CCH-31F: | trans,trans-4-Fluormethyl-4'-propylcyclohexylcyclohexan |
| PTP-102: | 4-Methyl-4'-ethoxy-tolan |
| PTP-201: | 4-Methoxy-4'-ethyl-tolan |
| CPTP-301: | 4-(trans-4-Propylcyclohexyl)-4'-methoxy-tolan |
| CPTP-302: | 4-(trans-4-Propylcyclohexyl)-4'-ethoxy-tolan |
| CPTP-303: | 4-(trans-4-Propylcyclohexyl)-4'-propoxy-tolan |
| CPTP-30CF3: | 4-(trans-4-Propylcyclohexyl)-4'-trifluormethoxy-tolan |
| CPTP-50CF3: | 4-(trans-4-Pentylcyclohexyl)-4'-trifluormethoxy-tolan |
| PCH-5F: | trans-1-p-Fluorphenyl-4-pentylcyclohexan |
| PCH-6F: | trans-1-p-Fluorphenyl-4-hexylcyclohexan |
| PCH-7F: | trans-1-p-Fluorphenyl-4-heptylcyclohexan |
| EPCH-20CF$_3$: | 1-(trans-4-Ethylcyclohexyl)-2-(p-tri-fluormethoxyphenyl)-ethan |
| EPCH-30CF$_3$: | 1-(trans-4-Propylcyclohexyl)-2-(p-tri-fluormethoxyphenyl)-ethan |
| EPCH-50CF$_3$: | 1-(trans-4-Pentylcyclohexyl)-2-(p-tri-fluormethoxyphenyl)-ethan |
| EPCH-70CF$_3$: | 1-(trans-4-Heptylcyclohexyl)-2-(p-tri-fluormethoxyphenyl)-ethan |
| PCH-30CF$_3$: | trans-1-p-Trifluormethoxyphenyl-4-propylcyclohexan |
| PCH-50CF$_3$: | trans-1-p-Trifluormethoxyphenyl-4-pentylcyclohexan |
| ECCP-30CF$_3$: | 1-[trans-4-(trans-4-Propylcyclohexyl)-cyclohexyl]-2-(p-trifluormethoxyphenyl)-ethan |
| ECCP-50CF$_3$: | 1-[trans-4-(trans-4-Pentylcyclohexyl)-cyclohexyl] -2-(p-trifluormethoxyphenyl)-ethan |
| CCP-20CF$_3$: | p-trans-4-(trans-4-Ethylcyclohexyl)-cyclohexyl]-trifluormethoxybenzol |
| CCP-30CF$_3$: | p-[trans-4-(trans-4-Propylcyclohexyl)-cyclohexyl]-trifluormethoxybenzol |
| CCP-40CF$_3$: | p-[trans-4-(trans-4-Butylcyclohexyl)-cyclohexyl]-trifluormethoxybenzol |
| CCP-50CF$_3$: | p-[trans-4-(trans-4-Pentylcyclohexyl)-cyclohexyl]-trifluormethoxybenzol |
| BCH-30CF$_3$: | 4-Trifluormethoxy-4'-(trans-4-propylcyclohexyl)-biphenyl |
| ECCP-3F.F: | 1-[trans-4-(trans-4-Propylcyclohexyl)-cyclohexyl]-2-(3,4-difluorphenyl)-ethan |
| ECCP-5F.F: | 1-[trans-4-(trans-4-Pentylcyclohexyl)-cyclohexyl]-2-(3,4-difluorphenyl)-ethan |

| | |
|---|---|
| CCP-3F.F: | 4-[trans-4-(trans-4-Propylcyclohexyl)-cyclohexyl]-1,2-difluorbenzol |
| CCP-5F.F: | 4-[trans-4-(trans-4-Pentylcyclohexyl)-cyclohexyl]-1,2-difluorbenzol |
| D-302FF: | 2,3-Difluor-4-ethoxyphenyl-trans-4-propylcyclohexyl-carboxylat |
| D-502FF: | 2,3-Difluor-4-ethoxyphenyl-trans-4-pentylcyclohexyl-carboxylat |
| CCP-3F: | 4-[trans-4-(trans-4-Propylcyclohexyl)-cyclohexyl]-fluorbenzol |
| ECCP-3F: | 1-[trans-4-(trans-4-Propylcyclohexyl)-cyclohexyl]-2-(p-fluorphenyl)-ethan |
| ECCP-5F: | 1-[trans-4-(trans-4-Pentylcyclohexyl)-cyclohexyl]-2-(p-fluorphenyl)-ethan |
| CP-3F: | trans-4-(trans-4-Propylcyclohexyl)-cyclohexancarbonsäure-(p-fluorphenylester) |
| CP-5F: | trans-4-(trans-4-Pentylcyclohexyl)-cyclohexancarbonsäure-(p-fluorphenylester) |

| | |
|---|---|
| PYP-31: | 2-p-Methylphenyl-5-propylpyrimidin |
| PYP-32: | 2-p-Ethylphenyl-5-propylpyrimidin |
| PYP-33: | 2-p-Propylphenyl-5-propylpyrimidin |
| PYP-34: | 2-p-Butylphenyl-5-propylpyrimidin |
| PYP-2F: | 2-p-Fluorphenyl-5-ethylpyrimidin |
| PYP-3F: | 2-p-Fluorphenyl-5-propylpyrimidin |
| PYP-5F: | 2-p-Fluorphenyl-5-pentylpyrimidin |
| PYP-6F: | 2-p-Fluorphenyl-5-hexylpyrimidin |
| PYP-7F: | 2-p-Fluorphenyl-5-heptylpyrimidin |
| PYP-30CF3: | 2-p-Trifluormethoxyphenyl-5-propylpyrimidin |
| PYP-50CF3: | 2-p-Trifluormethoxyphenyl-5-pentylpyrimidin |
| PYP-70CF3: | 2-p-Trifluormethoxyphenyl-5-heptylpyrimidin |
| PCH-3: | p-trans-4-Propylcyclohexyl-benzonitril |
| PCH-2: | p-trans-4-Ethylcyclohexyl-benzonitril |
| PCH-4: | p-trans-4-Butylcyclohexyl-benzonitril |
| PCH-5: | p-trans-4-Pentylcyclohexyl-benzonitril |
| ECCP-3: | 1-trans-4-(trans-4-Propylcyclohexyl)-cyclohexyl-2-(p-cyanphenyl)-ethan |
| ECCP-3$CF_3$: | 1-trans-4-(trans-4-Propylcyclohexyl)-cyclohexyl-2-(p-trifluormethylphenyl)-ethan |
| PTP35: | 4-Propyl-4'-pentyltolan |
| PTP45: | 4-Butyl-4'-pentyltolan |
| BCH-52F: | 4-(trans-4-Pentylcyclohexyl)-2-fluor-4'-ethylbiphenyl |
| CP-302FF: | trans-4-(trans-4-Propylcyclohexyl)-cyclohexancarbonsäure-(2, 3-difluor-4-ethoxyphenylester) |
| PCH-301: | trans-1-p-Methoxyphenyl-4-propylcyclohexan |
| PCH-401: | trans-1-p-Methoxyphenyl-4-butylcyclohexan |
| D-302: | 4-Ethoxyphenyl-trans-4-propylcyclohexylcarboxylat |
| D-402: | 4-Ethoxyphenyl-trans-4-butylcyclohexylcarboxylat |

| | |
|---|---|
| CCPC-33: | trans,trans-4-Propylcyclohexylcyclohexancarbonsäure (4-(4-trans-propylcyclohexyl)phenylester) |
| CCPC-34: | trans,trans-4-Propylcyclohexylcyclohexancarbonsäure (4-(4-trans-butylcyclohexyl)-phenylester) |
| CCPC-35: | trans,trans-4-Propylcyclohexylcyclohexancarbonsäure (4-(4-trans-pentylcyclohexyl)phenylester) |

| | |
|---|---|
| K6: | 4'-Ethyl-4-cyanobiphenyl |
| K9: | 4'-Propyl-4-cyanobiphenyl |

## Patentansprüche

**1.** Supertwist-Flüssigkristallanzeige mit

- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und

- einem Verdrillungswinkel der Flüssigkristallmischung in der Zelle von Orientierungsschicht zu Orientierungsschicht dem Betrag nach zwischen 100 und 600°, dadurch gekennzeichnet, daß die nematische Flüssigkristallmischung

a) auf Komponente A basiert, welche

- eine oder mehrere Verbindungen der Formel IIa:

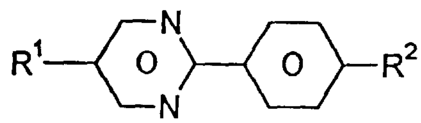

IIa

- eine oder mehrere Verbindungen der Formeln IIc bis IIe:

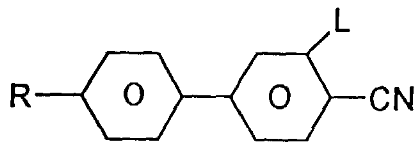

IIc

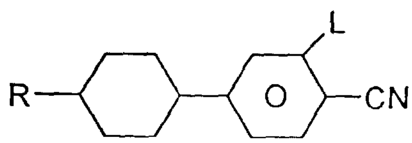

IId

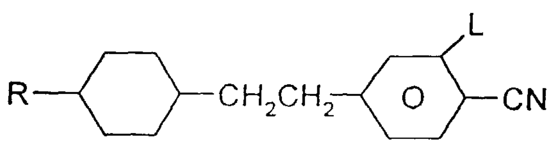

IIe

- und eine oder mehrere Verbindungen der Formeln IIf bis IIh enthält,

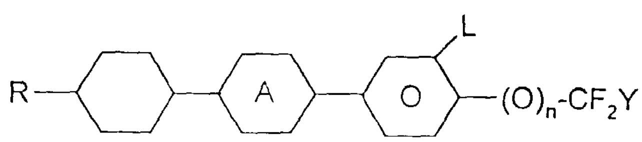

IIf

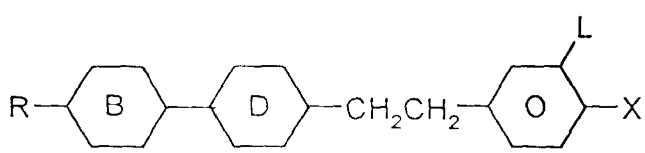

IIg

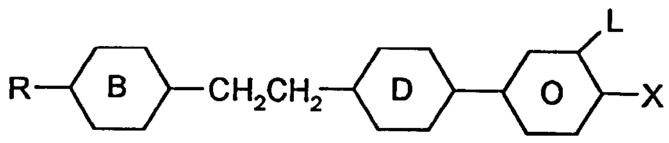

IIh

worin

$R^1$ und $R^2$ jeweils n-Alkyl mit 1 bis 8 C-Atomen, worin die Summe der C-Atome der Reste $R^1$ und $R^2$ 4 bis 8 beträgt

R n-Alkyl, n-Alkoxy oder n-Alkenyl mit bis zu 9 C-Atomen, und

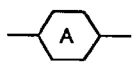 , 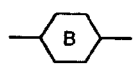 und 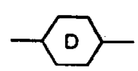

jeweils unabhängig voneinander

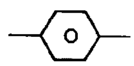 oder 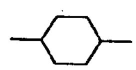 ,

Y und L jeweils H oder F

X F, Cl, $-CF_3$, $-CHF_2$, $-OCF_3$, $-OCHF_2$, $-OCF_2CF_2H$ oder $-OC_2F_5$, und

n 0 oder 1 bedeuten,

b) 0-40 Gew.% einer flüssigkristallinen Komponente B bestehend aus einer oder mehreren Verbindungen mit einer dielektrischen Anisotropie von -1,5 bis +1,5 der allgemeinen Formel I enthält,

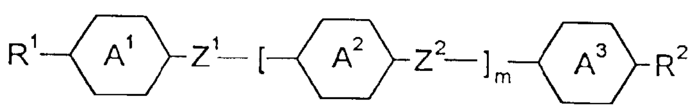

I

worin

$R^1$ und $R^2$ jeweils unabhängig voneinander n-Alkyl, n-Alkoxy, n-Oxaalkyl, ω-Fluoralkyl oder n-Alkenyl mit bis zu 9 C-Atomen,

$A^1$, $A^2$ und $A^3$ jeweils unabhängig voneinander 1,4-Phenylen, 2- oder 3-Fluor-1,4-phenylen, trans-1,4-Cyclohexylen oder 1,4-Cyclohexenylen,

$Z^1$ und $Z^2$ jeweils unabhängig voneinander $-CH_2CH_2-$, -C≡C- oder eine Einfachbindung, und

m 0, 1 oder 2 bedeutet,

c) 0-20 Gew.% einer flüssigkristallinen komponente C bestehend aus einer oder mehreren Verbindungen mit einer dielektrischen Anisotropie von unter -1,5 enthält, und

d) eine optisch aktive Komponente D in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt, und daß die nematische Flüssigkristallmischung einen nematischen Phasenbereich von mindestens 60 °C, eine Viskosität von nicht mehr als 35 mPa.s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20 °C bezogen sind.

2. Anzeige nach Anspruch 1, dadurch gekennzeichnet, daß Komponente A Verbindungen der Formeln IIg und IIh, worin X F bedeutet, und Verbindungen der Formel IIf, worin Y F bedeutet, enthält.

3. Anzeige nach mindestens einem der Ansprüche 1 bis 2, dadurch gekennzeichnet, daß X F, Cl, $CF_3$, $-OCF_3$, $OCHF_2$ oder $-CHF_2$ bedeutet.

4. Anzeige nach mindestens einem der Ansprüche 1 bis 3, dadurch gekennzeichnet, daß Komponente B eine oder mehrere Verbindungen ausgewählt aus der Gruppe bestehend aus II1 bis II7 enthält,

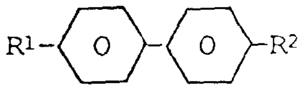 II1

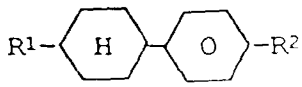 II2

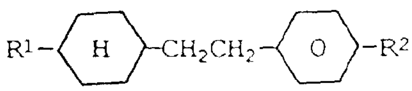 II3

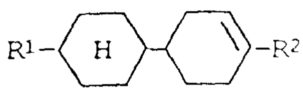 II4

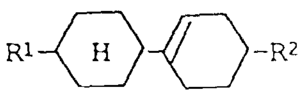 II5

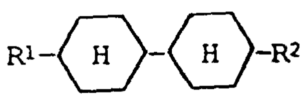 II6

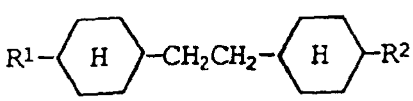 II7

worin $R^1$ und $R^2$ die in Anspruch 1 angegebene Bedeutung haben.

5. Anzeige nach Anspruch 4, dadurch gekennzeichnet, daß Komponente B zusätzlich eine oder mehrere Verbindungen ausgewählt aus der Gruppe bestehend aus II8 bis II21 enthält,

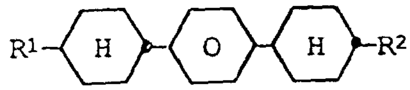
II8

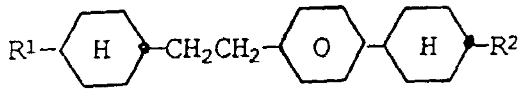
II9

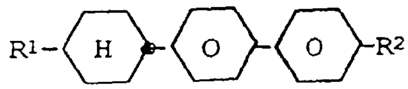
II10

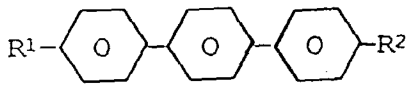
II11

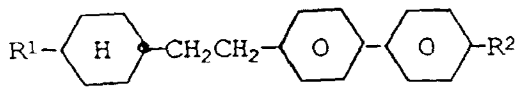
II12

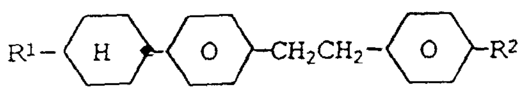
II13

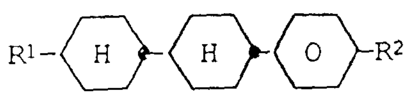
II14

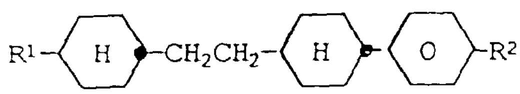
II15

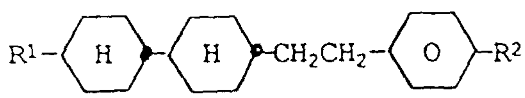
II16

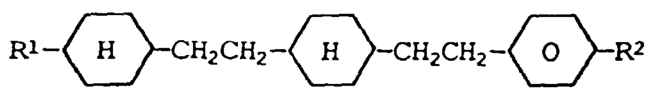
II17

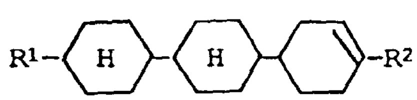
II18

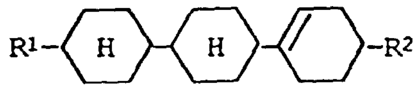

II19

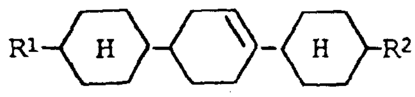

II20

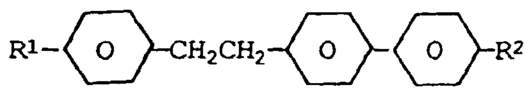

II21

worin $R^1$ und $R^2$ die in Anspruch 1 angegebene Bedeutung haben und die 1,4-Phenylengruppen in II8 bis II17 und II21 jeweils unabhängig voneinander auch durch Fluor ein- oder mehrfach substituiert sein können.

**6.** Anzeige nach Anspruch 4 oder 5, dadurch gekennzeichnet, daß Komponente B zusätzlich eine oder mehrere Verbindungen ausgewählt aus der Gruppe bestehend aus II22 bis II27 enthält,

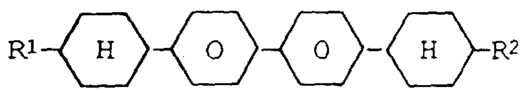

II22

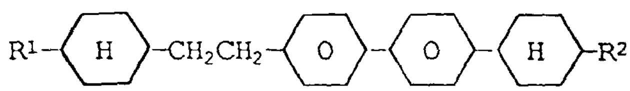

II23

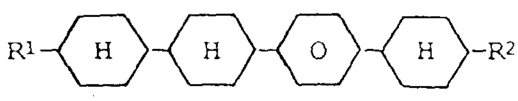

II24

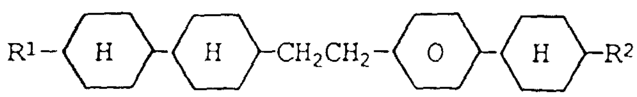

II25

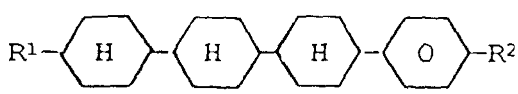

II26

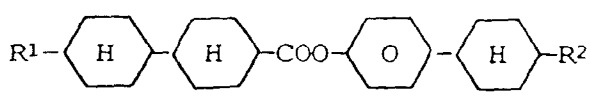

II27

worin $R^1$ und $R^2$ die in Anspruch 1 angegebene Bedeutung haben und die 1,4-Phenylengruppen in II22 bis II27 jeweils unabhängig voneinander auch durch Fluor ein- oder mehrfach substituiert sein können.

**7.** Anzeige nach mindestens einem der Ansprüche 1 bis 6, dadurch gekennzeichnet, daß Komponente B eine oder mehrere Verbindungen ausgewählt aus der Gruppe bestehend aus II28 und II29 enthält,

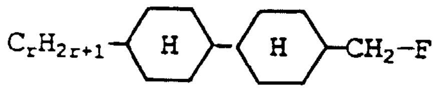

II28

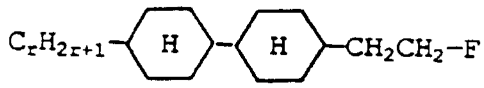

II29

worin $C_rH_{2r+1}$ eine geradkettige Alkylgruppe mit bis zu 7 C-Atomen ist.

**8.** Anzeige nach mindestens einem der Ansprüche 1 bis 7, dadurch gekennzeichnet, daß die Flüssigkristallmischung neben den Komponenten A, B und C zusätzlich eine oder mehrere Verbindungen ausgewählt aus der Gruppe bestehend aus III und IV enthält,

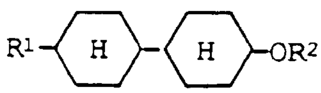

III

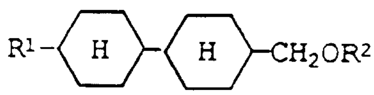

IV

worin $R^1$ und $R^2$ die in Anspruch 1 angegebene Bedeutung haben.

**9.** Anzeige nach mindestens einem der Ansprüche 1 bis 8, dadurch gekennzeichnet, daß die Komponente C eine oder mehrere Verbindungen ausgewählt aus der Gruppe bestehend aus VII bis XI enthält,

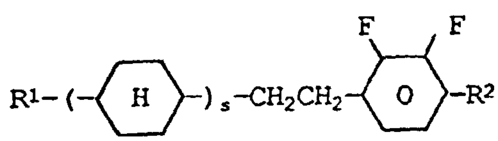

VII

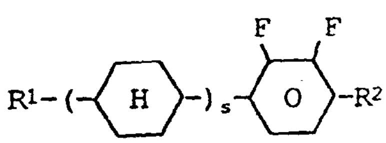

VIII

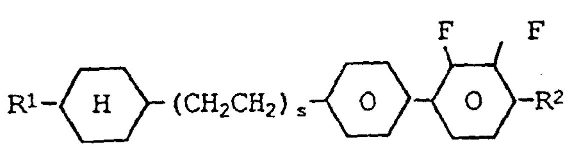

IX

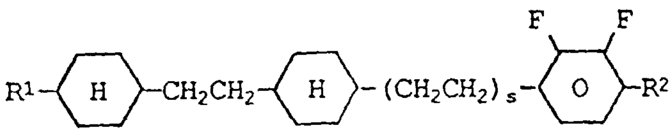 X

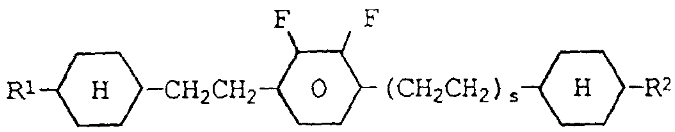 XI

worin $R^1$ und $R^2$ die in Anspruch 1 angegebene Bedeutung haben und s 0 oder 1 ist.

**10.** Anzeige nach mindestens einem der Ansprüche 1 bis 9, dadurch gekennzeichnet, daß die Komponente B eine oder mehrere Verbindungen ausgewählt aus der Gruppe bestehend aus XII bis XIV enthält,

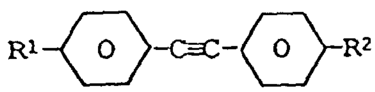 XII

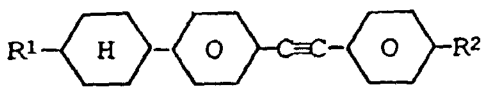 XIII

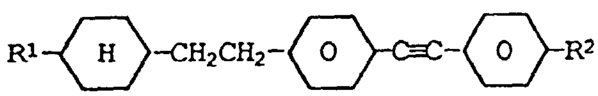 XIV

worin $R^1$ und $R^2$ die in Anspruch 1 angegebene Bedeutung haben.

**11.** Anzeige nach mindestens einem der Ansprüche 1 bis 10, dadurch gekennzeichnet, daß die Komponente A eine oder mehrere Verbindungen der Formel T3 enthält,

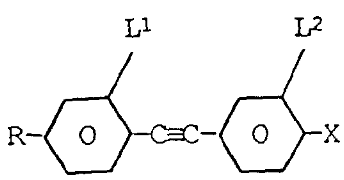 T3

worin

R $-C_nH_{2n+1}$, $-OC_nH_{2n+1}$,

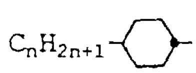

oder

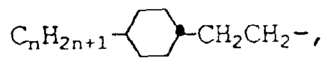

n eine ganze Zahl von 1-15,

$L^1$ und $L^2$ jeweils unabhängig voneinander H oder F, und

X F, Cl oder $OCF_3$ bedeuten.

**12.** Flüssigkristallmischung der in einem der Ansprüche 1 bis 11 definierten Zusammensetzung.

**13.** Flüssigkristallmischung nach Anspruch 12, dadurch gekennzeichnet, daß es in Form eines gebrauchsfertigen Sets aus zwei oder mehreren Komponenten, mit gleicher Schwellenspannung, vorliegt, dessen eine Komponente eine optische Anisotropie von 0,100-0,110 aufweist und die andere Komponente eine optische Anisotropie von 0,170 bis 0,180 aufweist.

**14.** Flüssigkristallmischung, hergestellt aus einem " 4-Bottle-System " mit den Komponenten A, B, C und D

| A | | B | |
|---|---|---|---|
| PCH-2 | 8,0 % | PCH-3 | 10,0 % |
| PCH-3 | 20,0 % | K6 | 7,0 % |
| PCH-4 | 7,0 % | K9 | 8,0 % |
| PCH-5 | 4,0 % | PCH-301 | 11,0 % |
| PYP-32 | 5,0 % | PYP-31 | 4,0 % |
| PYP-33 | 4,0 % | PYP-32 | 5,0 % |
| CCP-20CF3 | 8,0 % | PYP-33 | 4,0 % |
| CCP-30CF3 | 8,0 % | PTP-20F | 6,0 % |
| CCP-40CF3 | 7,0 % | PTP-40F | 6,0 % |
| CCP-50CF3 | 7,0 % | CCP-30CF3 | 6,0 % |
| ECCP-30CF3 | 5,0 % | CCP-50CF3 | 6,0 % |
| ECCP-50CF3 | 5,0 % | ECCP-30CF3 | 5,0 % |
| ECCP-3F.F | 6,0 % | ECCP-50CF3 | 5,0 % |
| ECCP-5F.F | 6,0 % | CPTP-30CF3 | 6,0 % |
| | | CPTP-50CF3 | 6,0 % |
| | | CPTP-302 | 5,0 % |
| **C** | | **D** | |
| PCH-2 | 5,0 % | PCH-3 | 18,0 % |
| PCH-3 | 20,0 % | PCH-5 | 7,0 % |
| PCH-5 | 8,0 % | K6 | 10,0 % |
| PCH-301 | 16,0 % | PCH-301 | 14,0 % |
| ME2N.F | 3,0 % | PCH-302 | 8,0 % |
| ME3N.F | 3,0 % | ME2N.F | 2,0 % |
| CCP-20CF3 | 5,0 % | ME3N.F | 2,0 % |
| CCP-30CF3 | 5,0 % | PTP-102 | 6,0 % |
| CCP-40CF3 | 5,0 % | PTP-201 | 6,0 % |
| CCP-50CF3 | 5,0 % | CPTP-301 | 6,0 % |
| ECCP-30CF3 | 5,0 % | CPTP-302 | 5,0 % |
| ECCP-50CF3 | 5,0 % | CPTP-303 | 6,0 % |
| ECCP-3F.F | 5,0 % | ECCP-3F | 3,0 % |
| ECCP-5F.F | 5,0 % | CCP-30CF3 | 4,0 % |
| CBC-53 | 5,0 % | CCP-50CF3 | 3,0 % |

zur Verwendung in einer Supertwist-Flüssigkristallanzeige nach Anspruch 1.

**15.** Flüssigkristallmischung, hergestellt aus einem " 4-Bottle-System " mit den Komponenten E, F, G und H

| E | | F | |
|---|---|---|---|
| PCH-3 | 19,0 % | PCH-3 | 8,0 % |
| PCH-4 | 8,0 % | K6 | 8,0 % |
| PCH-5 | 8,0 % | K9 | 8,0 % |
| PCH-301 | 7,0 % | PCH-301 | 12,0 % |
| CCP-20CF3 | 6,0 % | PYP-31 | 5,0 % |
| CCP-30CF3 | 6,0 % | PYP-32 | 5,0 % |
| CCP-40CF3 | 6,0 % | PYP-33 | 5,0 % |
| CCP-50CF3 | 6,0 % | PTP-201 | 4,0 % |
| ECCP-30CF3 | 7,0 % | CCP-30CF3 | 7,0 % |
| ECCP-50CF3 | 7,0 % | CCP-50CF3 | 7,0 % |
| PYP-32 | 6,0 % | ECCP-30CF3 | 7,0 % |
| PYP-33 | 6,0 % | ECCP-50CF3 | 7,0 % |
| CCPC-33 | 4,0 % | CPTP-301 | 6,0 % |
| CCPC-34 | 4,0 % | CPTP-302 | 5,0 % |
| | | CPTP-303 | 6,0 % |
| **G** | | **H** | |
| PCM-3 | 29,0 % | PCH-3 | 17,0 % |
| PCM-4 | 9,0 % | K6 | 6,0 % |
| PCH-5 | 9,0 % | K9 | 7,0 % |
| PCH-301 | 15,0 % | PCH-301 | 20,0 % |
| CCP-20CF3 | 6,0 % | PTP-102 | 6,0 % |
| CCP-30CF3 | 6,0 % | PTP-201 | 6,0 % |
| CCP-40CF3 | 6,0 % | CCP-30CF3 | 6,0 % |
| CCP-50CF3 | 6,0 % | CCP-50CF3 | 6,0 % |
| ECCP-30CF3 | 7,0 % | ECCP-30CF3 | 5,0 % |
| ECCP-50CF3 | 7,0 % | ECCP-50CF3 | 5,0 % |
| CBC-33F | 4,0 % | CPTP-301 | 5,0 % |
| CBC-53F | 5,0 % | CPTP-302 | 6,0 % |
| | | CPTP-303 | 5,0 % |

zur Verwendung in einer Supertwist-Flüssigkristallanzeige nach Anspruch 1.

## Claims

**1.** Supertwist liquid-crystal display containing

- two plane-parallel outer plates which, together with a frame, form a cell,
- a nematic liquid-crystal mixture of positive dielectric anisotropy which is present in the cell,
- electrode layers with superposed alignment layers on the insides of the outer plates,
- a pitch angle between the longitudinal axis of the molecules at the surface of the outer plates and the outer plates of from about 1 degree to 30 degrees, and
- a twist angle of the liquid-crystal mixture in the cell from alignment layer to alignment layer with a value of between 100 and 600°, characterised in that the nematic liquid-crystal mixture

a) is based on component A, which contains

- one or more compounds of the formula IIa:

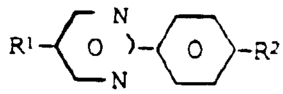

IIa

- one or more compounds of the formulae IIc to IIe:

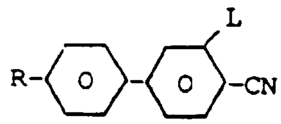

IIc

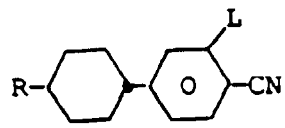

IId

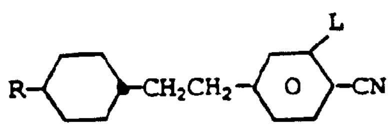

IIe

- and one or more compounds of the formulae IIf to IIh:

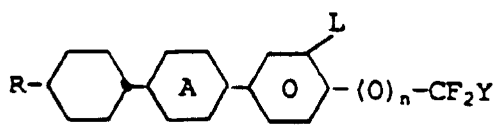

IIf

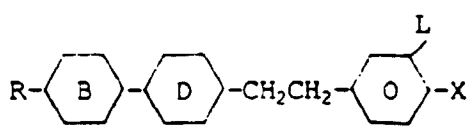

IIg

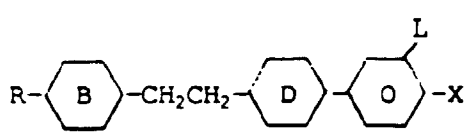

IIh

in which

$R^1$ and $R^2$ are each n-alkyl having 1 to 8 carbon atoms, in which the total number of carbon atoms in the radicals $R^1$ and $R^2$ is 4 to 8,

R is n-alkyl, n-alkoxy or n-alkenyl having up to 9 carbon atoms, and

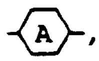, 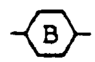 and 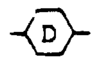

are each, independently of one another,

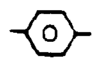 or 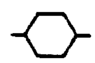 ,

Y and L are each H or F,

X is F, Cl, $-CF_3$, $-CHF_2$, $-OCF_3$, $-OCHF_2$, $-OCF_2CF_2H$ or $-OC_2F_5$, and

n is 0 or 1,

b) contains 0-40% by weight of a liquid-crystalline component B comprising one or more compounds having a dielectric anisotropy of from -1.5 to +1.5, of the general formula I

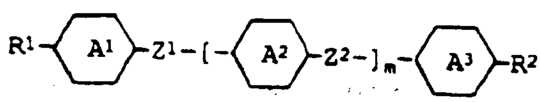 I

in which

$R^1$ and $R^2$ are each, independently of one another, n-alkyl, n-alkoxy, n-oxaalkyl, ω-fluoroalkyl or n-alkenyl having up to 9 carbon atoms,

$A^1$, $A^2$ and $A^3$ are each, independently of one another, 1,4-phenylene, 2- or 3-fluoro-1,4-phenylene, trans-1,4-cyclohexylene or 1,4-cyclohexenylene,

$Z^1$ and $Z^2$ are each, independently of one another, $-CH_2CH_2-$, -C≡C- or a single bond, and

m is 0, 1 or 2,

c) contains 0-20% by weight of a liquid-crystalline component C comprising one or more compounds having a dielectric anisotropy of below -1.5, and

d) contains an optically active component D in such an amount that the ratio between the layer thickness (separation of the plane-parallel outer plates) and the natural pitch of the chiral nematic liquid-crystal mixture is from about 0.2 to 1.3 and the nematic liquid-crystal mixture has a nematic phase range of at least 60°C, a viscosity of not more than 35 mPa.s and a dielectric anisotropy of at least +1, the dielectric anisotropies of the compounds and the parameters based on the nematic liquid-crystal mixture being based on a temperature of 20°C.

2. Display according to Claim 1, characterised in that component A contains compounds of the formulae IIg and IIh in which X is F and compounds of the formulae IIf in which Y is F.

3. Display according to at least one of Claims 1 to 2, characterised in that X is F, Cl, $CF_3$, $-OCF_3$, $-OCHF_2$ or $-CHF_2$.

4. Display according to at least one of Claims 1 to 3, characterised in that component B contains one or more compounds selected from the group comprising II1 to II7:

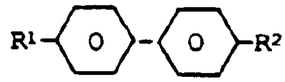

II1

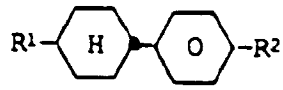

II2

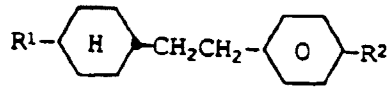

II3

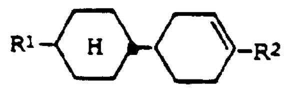

II4

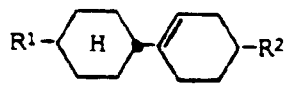

II5

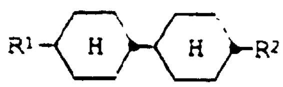

II6

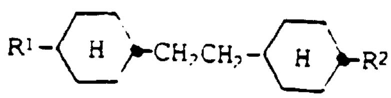

II7

in which $R^1$ and $R^2$ are as defined in Claim 1.

**5.** Display according to Claim 4, characterised in that component B additionally contains one or more compounds selected from the group comprising II8 to II21:

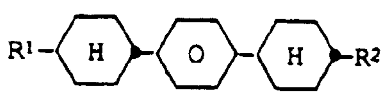

II8

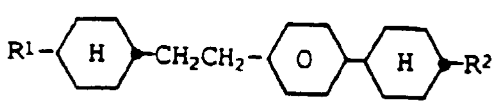

II9

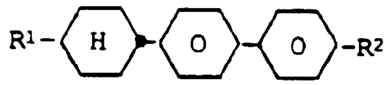
II10

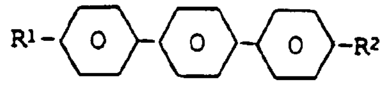
II11

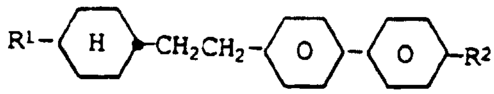
II12

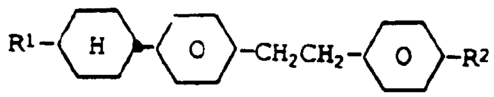
II13

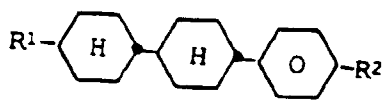
II14

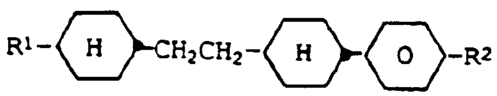
II15

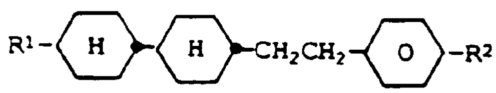
II16

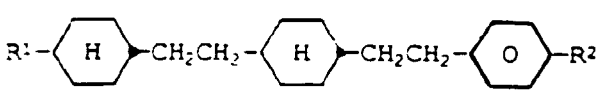
II17

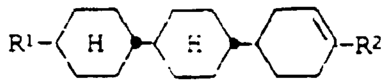
II18

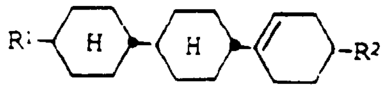
II19

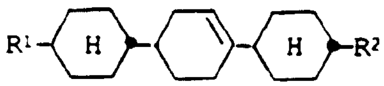

II20

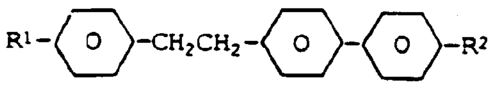

II21

in which $R^1$ and $R^2$ are as defined in Claim 1, and the 1,4-phenylene groups in II8 to II17 and II21 may each, independently of one another, also be mono- or polysubstituted by fluorine.

**6.** Display according to Claim 4 or 5, characterised in that component B additionally contains one or more compounds selected from the group comprising II22 to II27:

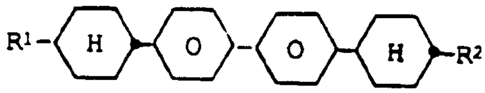

II22

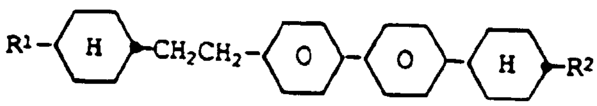

II23

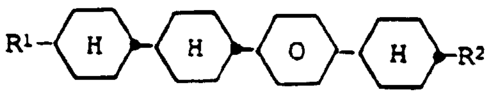

II24

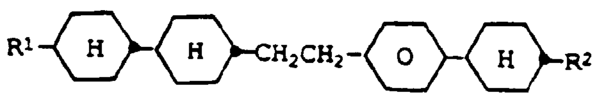

II25

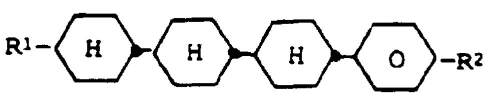

II26

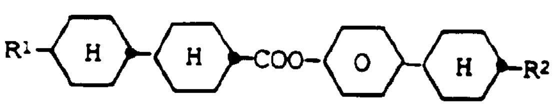

II27

in which $R^1$ and $R^2$ are as defined in Claim 1, and the 1,4-phenylene groups in II22 to II27 may each, independently of one another, also be mono- or polysubstituted by fluorine.

**7.** Display according to at least one of Claims 1 to 6, characterised in that component B contains one or more compounds selected from the group comprising II28 and II29:

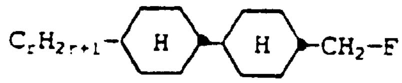

II28

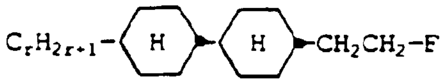

II29

in which $C_rH_{2r+1}$ is a straight-chain alkyl group having up to 7 carbon atoms.

**8.** Display according to at least one of Claims 1 to 7, characterised in that the liquid-crystal mixture contains, in addition to components A, B and C, additionally one or more compounds selected from the group comprising III and IV:

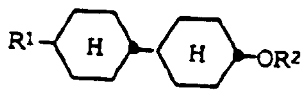

III

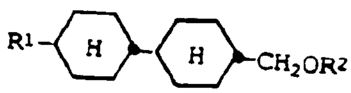

IV

in which $R^1$ and $R^2$ are as defined in Claim 1.

**9.** Display according to at least one of Claims 1 to 8, characterised in that component C contains one or more compounds selected from the group comprising VII to XI:

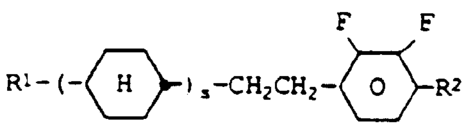

VII

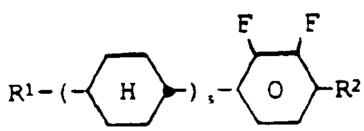

VIII

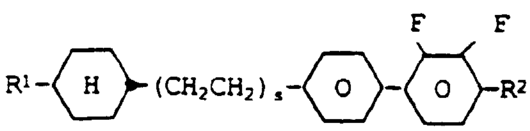

IX

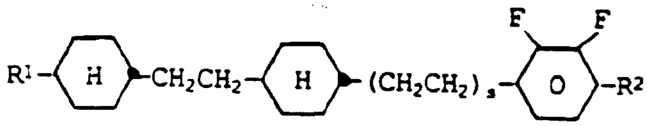

X

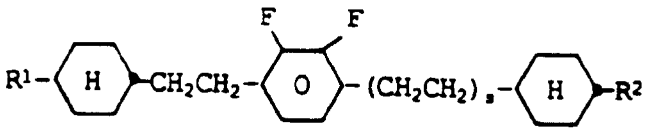

XI

in which $R^1$ and $R^2$ are as defined in Claim 1, and s is 0 or 1.

**10.** Display according to at least one of Claims 1 to 9, characterised in that component B contains one or more compounds selected from the group comprising XII to XIV:

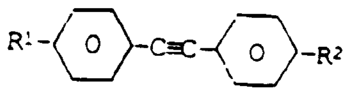

XII

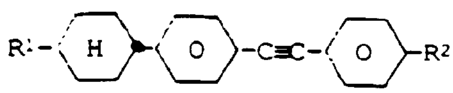

XIII

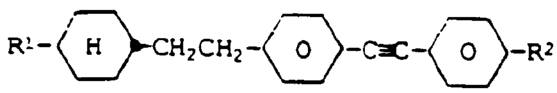

XIV

in which $R^1$ and $R^2$ are as defined in Claim 1.

**11.** Display according to at least one of Claims 1 to 10, characterised in that component A contains one or more compounds of the formula T3

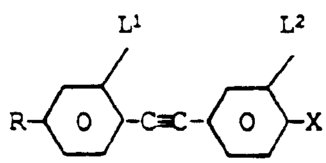

T3

in which

R is $-C_nH_{2n+1}$, $-OC_nH_{2n+1}$,

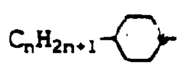

or

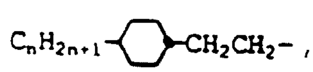

n is an integer from 1 to 15,

$L^1$ and $L^2$ are each, independently of one another, H or F, and

X is F, Cl or $OCF_3$.

**12.** Liquid-crystal mixture of the composition defined in one of Claims 1 to 11.

**13.** Liquid-crystal mixture according to Claim 12, characterised in that it is in the form of a ready-to-use set comprising two or more components of identical threshold voltage, whose one component has an optical anisotropy of from 0.100-0.110 and the other component has an optical anisotropy of from 0.170 to 0.180.

**14.** Liquid-crystal mixture prepared from a "4 bottle system" having the components A, B, C and D

| A | | B | |
|---|---|---|---|
| PCH-2 | 8.0 % | PCH-3 | 10.0 % |
| PCH-3 | 20.0 % | K6 | 7.0 % |
| PCH-4 | 7.0 % | K9 | 8.0 % |
| PCH-5 | 4.0 % | PCH-301 | 11.0 % |
| PYP-32 | 5.0 % | PYP-31 | 4.0 % |
| PYP-33 | 4.0 % | PYP-32 | 5.0 % |
| CCP-20CF3 | 8.0 % | PYP-33 | 4.0 % |
| CCP-30CF3 | 8.0 % | PTP-20F | 6.0 % |
| CCP-40CF3 | 7.0 % | PTP-40F | 6.0 % |
| CCP-50CF3 | 7.0 % | CCP-30CF3 | 6.0 % |
| ECCP-30CF3 | 5.0 % | CCP-50CF3 | 6.0 % |
| ECCP-50CF3 | 5.0 % | ECCP-30CF3 | 5.0 % |
| ECCP-3F.F | 6.0 % | ECCP-50CF3 | 5.0 % |
| ECCP-5F.F | 6.0 % | CPTP-30CF3 | 6.0 % |
| | | CPTP-50CF3 | 6.0 % |
| | | CPTP-302 | 5.0 % |
| **E** | | **F** | |
| PCH-3 | 19.0 % | PCH-3 | 8.0 % |
| PCH-4 | 8.0 % | K6 | 8.0 % |
| PCH-5 | 8.0 % | K9 | 8.0 % |
| PCH-301 | 7.0 % | PCH-301 | 12.0 % |
| CCP-20CF3 | 6.0 % | PYP-31 | 5.0 % |
| CCP-30CF3 | 6.0 % | PYP-32 | 5.0 % |
| CCP-40CF3 | 6.0 % | PYP-33 | 5.0 % |
| CCP-50CF3 | 6.0 % | PTP-201 | 4.0 % |
| ECCP-30CF3 | 7.0 % | CCP-30CF3 | 7.0 % |
| ECCP-50CF3 | 7.0 % | CCP-50CF3 | 7.0 % |
| PYP-32 | 6.0 % | ECCP-30CF3 | 7.0 % |
| PYP-33 | 6.0 % | ECCP-50CF3 | 7.0 % |
| CCPC-33 | 4.0 % | CPTP-301 | 6.0 % |
| CCPC-34 | 4.0 % | CPTP-302 | 5.0 % |
| | | CPTP-303 | 6.0 % |

for use in supertwist liquid-crystal display according to Claim 1.

**15.** Liquid-crystal mixture prepared from a "4 bottle system" having the components E. F, G and H

| E | | F | |
|---|---|---|---|
| PCH-3 | 19,0 % | PCH-3 | 8,0 % |
| PCH-4 | 8,0 % | K6 | 8,0 % |
| PCH-5 | 8,0 % | K9 | 8,0 % |

(continued)

| E | | F | |
|---|---|---|---|
| PCH-301 | 7,0 % | PCH-301 | 12,0 % |
| CCP-20CF3 | 6,0 % | PYP-31 | 5,0 % |
| CCP-30CF3 | 6,0 % | PYP-32 | 5,0 % |
| CCP-40CF3 | 6,0 % | PYP-33 | 5,0 % |
| CCP-50CF3 | 6,0 % | PTP-201 | 4,0 % |
| ECCP-30CF3 | 7,0 % | CCP-30CF3 | 7,0 % |
| ECCP-50CF3 | 7,0 % | CCP-50CF3 | 7,0 % |
| PYP-32 | 6,0 % | ECCP-30CE3 | 7,0 % |
| PYP-33 | 6,0 % | ECCP-50CF3 | 7,0 % |
| CCPC-33 | 4,0 % | CPTP-301 | 6, 0 % |
| CCPC-34 | 4,0 % | CPTP-302 | 5,0 % |
| | | CPTP-303 | 6,0 % |
| **G** | | **H** | |
| PCH-3 | 29.0 % | PCH-3 | 17.0 % |
| PCH-4 | 9.0 % | K6 | 6.0 % |
| PCH-5 | 9.0 % | K9 | 7.0 % |
| PCH-301 | 15.0 % | PCH-301 | 20.0 % |
| CCP-20CF3 | 6.0 % | PTP-102 | 6.0 % |
| CCP-30CF3 | 6.0 % | PTP-201 | 6.0 % |
| CCP-40CF3 | 6.0 % | CCP-30CF3 | 6.0 % |
| CCP-50CF3 | 6.0 % | CCP-50CF3 | 6.0 % |
| ECCP-30CF3 | 7.0 % | ECCP-30CF3 | 5.0 % |
| ECCP-50CF3 | 7.0 % | ECCP-50CF3 | 5.0 % |
| CBC-33F | 4.0 % | CPTP-301 | 5.0 % |
| CBC-53F | 5.0 % | CPTP-302 | 6.0 % |
| | | CPTP-303 | 5.0 % |

for use in supertwist liquid-crystal display according to Claim 1.

## Revendications

**1.** Affichage à cristaux liquides super-torsadé avec

- deux plaques support à plans parallèles, qui avec un bord forment une cellule,
- un mélange de cristaux liquides nématique à anisotropie diélectrique positive se trouvant dans la cellule,
- des couches d'électrodes surmontées par des couches d'orientation sur les côtés internes des plaques support,
- un angle d'exécution entre l'axe longitudinal des molécules à la surface des plaques support et les plaques support d'environ 1 degré à environ 30 degrés, et
- un angle de transposition du mélange de cristaux liquides dans la cellule d'une couche d'orientation à une autre compris entre 100 et 600°,

  caractérisé en ce que le mélange de cristaux liquides

  a) est à base de composant A, qui contient

  - un ou plusieurs composés de formule IIa:

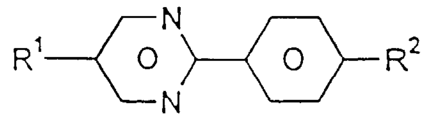

IIa

- un ou plusieurs composés de formules IIc à IIe:

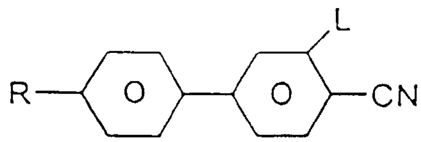

IIc

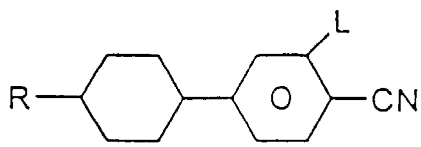

IId

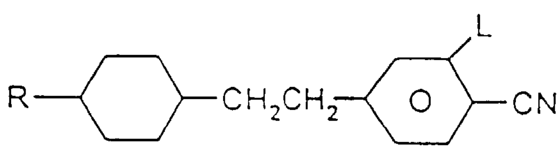

IIe

- et un ou plusieurs composés de formules IIf à IIh

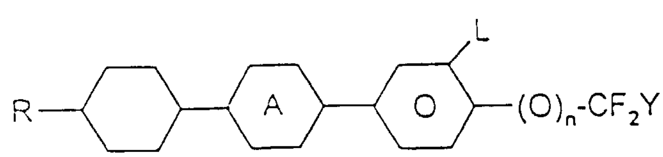

IIf

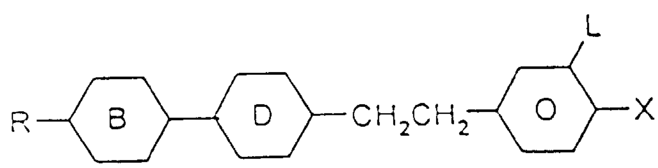

IIg

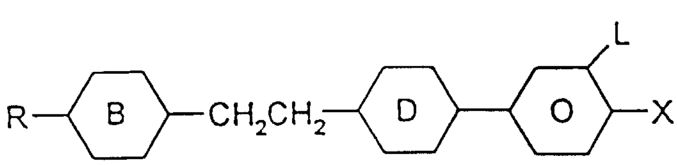

IIh

dans lesquelles

$R^1$ et $R^2$ représentent chacun un n-alkyle ayant de 1 à 8 atomes de carbone, où la somme des atomes de carbone des radicaux $R^1$ et $R^2$ est comprise entre 4 et 8

R représente un n-alkyle, un n-alcoxy ou un n-alcényle ayant jusqu'à 9 atomes de carbone compris, et

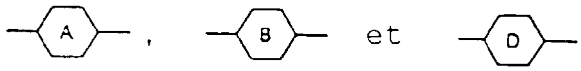

représentent chacun indépendamment l'un de l'autre

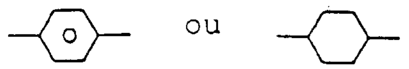

Y et L représentent chacun H ou F
X représente F, Cl, $-CF_3$, $-CHF_2$, $-OCF_3$, $-OCHF_2$, $-OCF_2CF_2H$ ou $-OC_2F_5$, et
n vaut 0 ou 1,

b) de 0 % à 40% en poids d'un <u>composant B</u> à cristaux liquides constitué d'un ou plusieurs composés ayant une anisotropie diélectrique de -1,5 à +1,5 de formule générale I

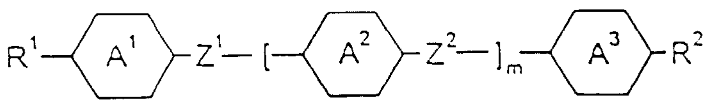

I

dans laquelle

$R^1$ et $R^2$ représentent chacun indépendamment l'un de l'autre un n-alkyle, n-alcoxy, n-oxaalkyle, ω-fluoroalkyle ou n-alcényle ayant jusqu'à 9 atomes de carbone compris,
$A^1$, $A^2$ représentent chacun indépendamment l'un de et $A^3$ l'autre un 1,4-phénylène, un 2- ou 3-fluoro-1,4-phénylène, un trans-1,4-cyclohexylène ou un 1,4-cyclohexénylène,
$Z^1$ et $Z^2$ représentent chacun indépendamment l'un de l'autre $-CH_2CH_2-$, -C≡C- ou une liaison simple, et
m vaut 0,1 ou 2,

c) de 0 à 20% en poids d'un composant C à cristaux liquides, constitué d'un ou plusieurs composés ayant une anisotropie diélectrique inférieure à -1,5 , et
d) un composant d optiquement actif en une quantité qui présente un rapport entre l'épaisseur de la couche (intervalle entre les plaques support à plans parallèles) et le pas naturel du mélange à cristaux liquides nématique chiral d'environ 0,2 à 1,3 ,
et en ce que le mélange de cristaux liquides nématique présente un intervalle de phase nématique d'au moins 60°C, une viscosité d'au plus 35 mPa.s et une anisotropie diélectrique d'au moins +1, où les anisotropies diélectriques des composés et les paramètres se rapportant au mélange des cristaux liquides nématique concernent une température de 20°C.

**2.** Affichage selon la revendication 1, caractérisé en ce que le composant A contient des composés de formules IIg et IIh, où X représente F, et des composés de formule IIf, où Y représente F.

**3.** Affichage selon au moins une des revendications 1 à 2, caractérisé en ce que X représente F, Cl, $CF_3$, -OCF3 , $OCHF_2$ ou $-CHF_2$.

**4.** Affichage selon au moins une des revendications 1 à 3, caractérisé en ce que le composant B contient un ou plusieurs composés choisis dans le groupe constitué par II1 à II7

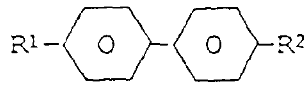

II1

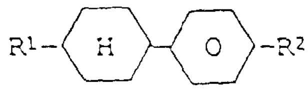

II2

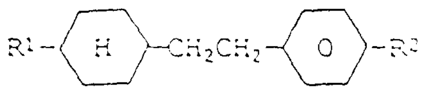

II3

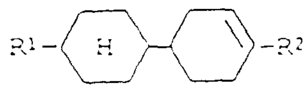

II4

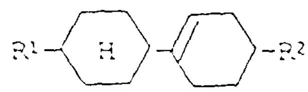

II5

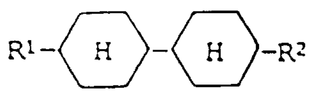

II6

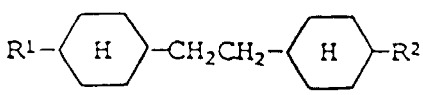

II7

où $R^1$ et $R^2$ ont la signification donnée dans la revendication 1.

**5.** Affichage selon la revendication 4, caractérisé en ce que le composant B contient en outre un ou plusieurs composés choisis dans le groupe constitué par II8 à II21

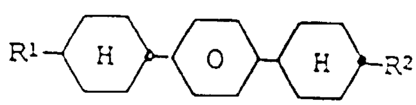

II8

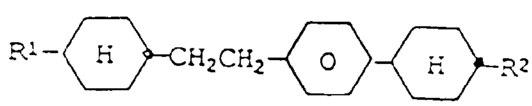

II9

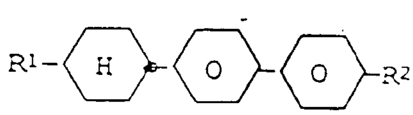

II10

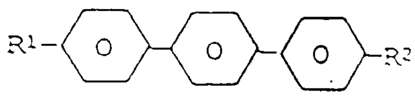

II11

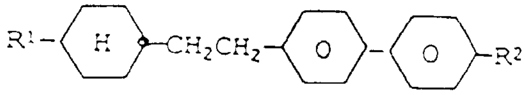

II12

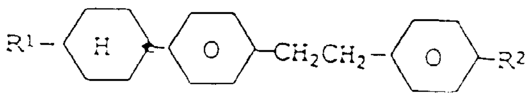

II13

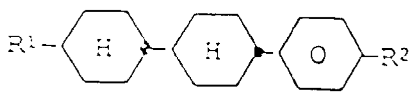

II14

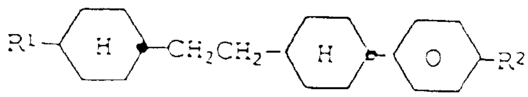

II15

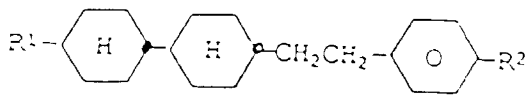

II16

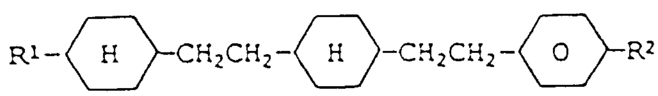

II17

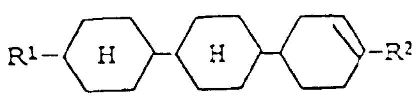

II18

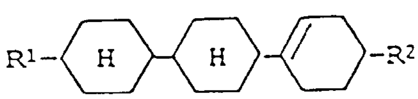

II19

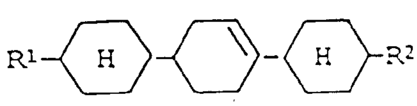

II20

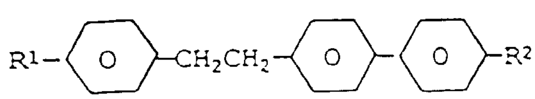

II21

où $R^1$ et $R^2$ ont la signification donnée dans la revendication 1 et les groupes 1,4-phénylène dans II8 à II17 et II21 peuvent également être mono- ou polysubstitués indépendamment les uns des autres par un fluor.

**6.** Affichage selon la revendication 4 ou 5, caractérisé en ce que le composant B contient en outre n ou plusieurs composés choisis dans le groupe constitué par II22 à II27

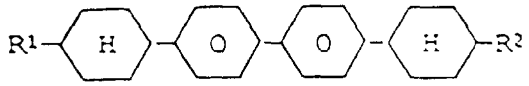

II22

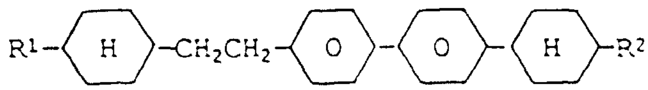

II23

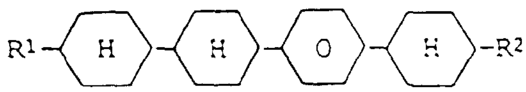

II24

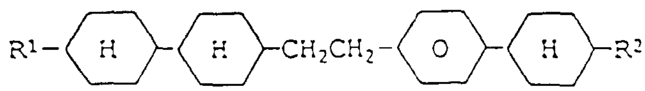

II25

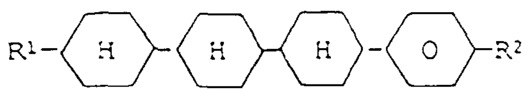

II26

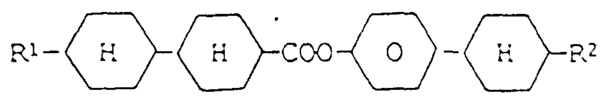

II27

où $R^1$ et $R^2$ ont la signification donnée dans la revendication 1 et les groupes 1,4-phénylène dans II22 à II27 peuvent également être chacun indépendamment les uns de autres substitués par un fluor.

**7.** Affichage selon au moins une des revendications 1 à 6, caractérisé en ce que le composant B contient un ou plusieurs composés choisis dans le groupe constitué par II28 et II29

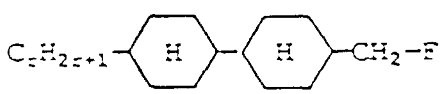

II28

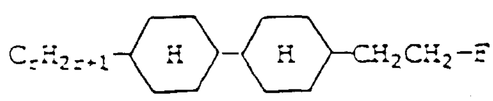

II29

où $C_rH_{2r+1}$ est un groupe alkyle à chaîne droite ayant jusqu'à 7 atomes de carbone.

**8.** Affichage selon au moins une des revendications 1 à 7, caractérisé en ce que le mélange à cristaux liquides contient en outre, en plus des composants A, B et C, un ou plusieurs composés choisis dans le groupe constitué par IIIet IV

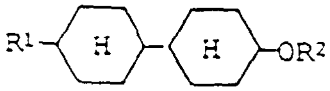

III

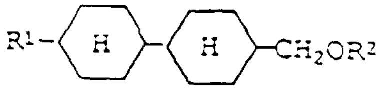

IV

où $R^1$ et $R^2$ ont la signification donnée dans la revendication 1.

**9.** Affichage selon au moins une des revendications 1 à 8, caractérisé en ce que le composant C contient un ou plusieurs composés choisis dans le groupe constitué par VII à XI

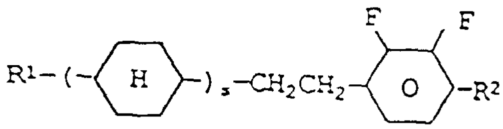

VII

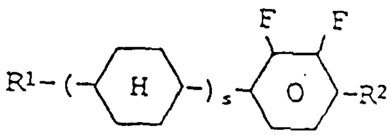

VIII

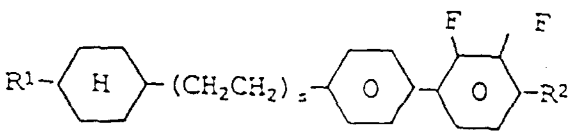

IX

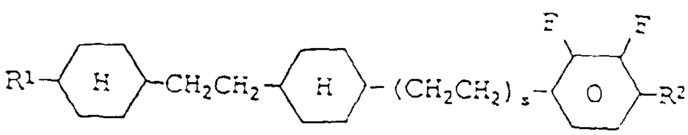

X

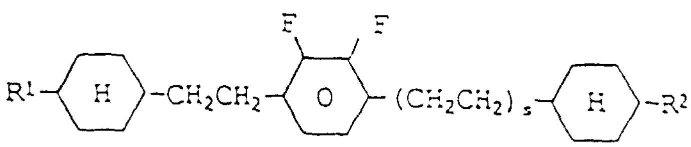

XI

où $R^1$ et $R^2$ ont la signification donnée dans la revendication 1 et s vaut 0 ou 1.

**10.** Affichage selon au moins une des revendications 1 à 9, caractérisé en ce que le composant B contient un ou plusieurs composés choisis dans le groupe constitué par XII à XIV,

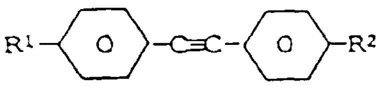

XII

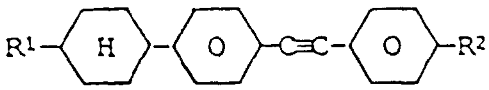

XIII

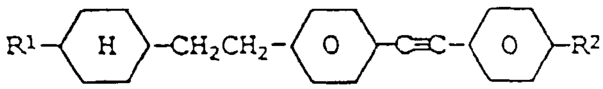

XIV

où $R^1$ et $R^2$ ont la signification donnée dans la revendication 1.

**11.** Affichage selon au moins une des revendications 1 à 10, caractérisé en ce que le composant A contient un ou plusieurs composés de formule T3

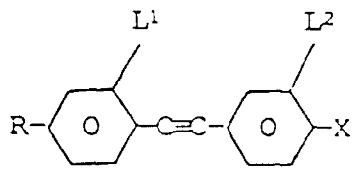

T3

dans laquelle

R représente $-C_nH_{2n+1}$, $-OC_nH_{2n+1}$,

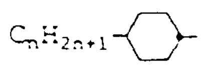

ou

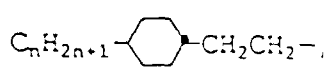

n représente un nombre entier allant de 1 à 15,
$L^1$ et $L^2$ représentent indépendamment l'un de l'autre H ou F, et
X représente F, Cl ou $OCF_3$.

**12.** Affichage à cristaux liquides ayant la composition définie dans l'une des revendications 1 à 11.

**13.** Mélange de cristaux liquides selon la revendication 12, caractérisé en ce qu'il se présente sous la forme d'un ensemble prêt à l'emploi de deux ou plusieurs composants, avec même tension d'onde, dont un composant présente une anisotropie optique de 0,100-0,110 et l'autre composant présente une anisotropie optique de 0,170 à 0,180.

**14.** Mélange de cristaux liquides préparé à partir d'un "4-Bottle-System" avec les composants A, B, C et D

| A | | B | |
|---|---|---|---|
| PCH-2 | 8,0 % | PCH-3 | 10,0 % |
| PCH-3 | 20,0 % | K6 | 7,0 % |
| PCH-4 | 7,0 % | K9 | 8,0 % |
| PCH-5 | 4,0 % | PCH-301 | 11,0 % |
| PYP-32 | 5,0 % | PYP-31 | 4,0 % |

(suite)

| A | | B | |
|---|---|---|---|
| PYP-33 | 4,0 % | PYP-32 | 5,0 % |
| CCP-20CF3 | 8,0 % | PYP-33 | 4,0 % |
| CCP-30CF3 | 8,0 % | PTP-20F | 6,0 % |
| CCP-40CF3 | 7,0 % | PTP-40F | 6,0 % |
| CCP-50CF3 | 7,0 % | CCP-30CF3 | 6,0 % |
| ECCP-30CF3 | 5,0 % | CCP-50CF3 | 6,0 % |
| ECCP-50CF3 | 5,0 % | ECCP-30CF3 | 5,0 % |
| ECCP-3F.F | 6,0 % | ECCP-50CF3 | 5,0 % |
| ECCP-5F.F | 6,0 % | CPTP-30CF3 | 6,0 % |
| | | CPTP-50CF3 | 6,0 % |
| | | CPTP-302 | 5,0 % |
| **C** | | **D** | |
| PCH-2 | 5,0 % | PCH-3 | 18,0 % |
| PCH-3 | 20,0 % | PCH-5 | 7,0 % |
| PCH-5 | 8,0 % | K6 | 10,0 % |
| PCH-301 | 16,0 % | PCH-301 | 14,0 % |
| ME2N.F | 3,0 % | PCH-302 | 8,0 % |
| ME3N.F | 3,0 % | ME2N.F | 2,0 % |
| CCP-20CF3 | 5,0 % | ME3N.F | 2,0 % |
| CCP-30CF3 | 5,0 % | PTP-102 | 6,0 % |
| CCP-40CF3 | 5,0 % | PTP-201 | 6,0 % |
| CCP-50CF3 | 5,0 % | CPTP-301 | 6,0 % |
| ECCP-30CF3 | 5,0 % | CPTP-302 | 5,0 % |
| ECCP-50CF3 | 5,0 % | CPTP-303 | 6,0 % |
| ECCP-3F.F | 5,0 % | ECCP-3F | 3,0 % |
| ECCP-5F.F | 5,0 % | CCP-30CF3 | 4,0 % |
| CBC-53 | 5,0 % | CCP-50CF3 | 3,0 % |

aux fins d'utilisation dans un affichage à cristaux liquides super-torsadé selon la revendication 1.

**15.** Mélange de cristaux liquides préparé à partir d'un "4-Bottle-System" avec les composants E, F, G et H

| E | | F | |
|---|---|---|---|
| PCH-3 | 19,0 % | PCH-3 | 8,0 % |
| PCH-4 | 8,0 % | K6 | 8,0 % |
| PCH-5 | 8,0 % | K9 | 8,0 % |
| PCH-301 | 7,0 % | PCH-301 | 12,0 % |
| CCP-20CF3 | 6,0 % | PYP-31 | 5,0 % |
| CCP-30CF3 | 6,0 % | PYP-32 | 5,0 % |
| CCP-40CF3 | 6,0 % | PYP-33 | 5,0 % |
| CCP-50CF3 | 6,0 % | PTP-201 | 4,0 % |
| ECCP-30CF3 | 7,0 % | CCP-30CF3 | 7,0 % |
| ECCP-50CF3 | 7,0 % | CCP-50CF3 | 7,0 % |
| PYP-32 | 6,0 % | ECCP-30CF3 | 7,0 % |
| PYP-33 | 6,0 % | ECCP-50CF3 | 7,0 % |
| CCPC-33 | 4,0 % | CPTP-301 | 6,0 % |
| CCPC-34 | 4,0 % | CPTP-302 | 5,0 % |
| | | CPTP-303 | 6,0 % |

(suite)

| G | | H | |
|---|---|---|---|
| PCH-3 | 29,0 % | PCH-3 | 17,0 % |
| PCH-4 | 9,0 % | K6 | 6,0 % |
| PCH-5 | 9,0 % | K9 | 7,0 % |
| PCH-301 | 15,0 % | PCH-301 | 20,0 % |
| CCP-20CF3 | 6,0 % | PTP-102 | 6,0 % |
| CCP-30CF3 | 6,0 % | PTP-201 | 6,0 |
| CCP-40CF3 | 6,0 % | CCP-30CF3 | 6,0 % |
| CCP-50CF3 | 6,0 % | CCP-50CF3 | 6,0 % |
| ECCP-30CF3 | 7,0 % | ECCP-30CF3 | 5,0 % |
| ECCP-50CF3 | 7,0 % | ECCP-50CF3 | 5,0 % |
| CBC-33F | 4,0 % | CPTP-301 | 5,0 % |
| CBC-53F | 5,0 % | CPTP-302 | 6,0 % |
| | | CPTP-303 | 5,0 % |

aux fins d'utilisation dans un affichage à cristaux liquides super-torsadé selon la revendication 1.